# EUROPEAN PATENT SPECIFICATION

(11) **EP 1 692 807 B1**
(45) Date of publication and mention of the grant of the patent: **20.06.2007**
(21) Application number: 04790994.0
(22) Date of filing: 28.10.2004
(51) Int. Cl.: H04L 9/08

(54) **A SECURE CRYPTOGRAPHIC COMMUNICATION SYSTEM USING KEM-DEM**
SICHERES KRYPTOGRAPHISCHES KOMMUNIKATIONSSYSTEM MIT KEM-DEM
SYSTEME DE COMMUNICATION CRYPTOGRAPHIQUE SECURISE UTILISANT UN MECANISME KEM-DEM

(30) Priority: 29.10.2003 GB 0325225; 23.01.2004 GB 0401470
(43) Date of publication of application: 23.08.2006
(73) Proprietor: Argelcom Limited, Temple Quay, Bristol BS1 6EG (GB)
(72) Inventor: SMART, Nigel, Paul, Bristol BS35 1EG (GB)
(74) Representative: Beresford, Keith Denis Lewis
(86) International application number: PCT/EP2004/012226
(87) International publication number: WO 2005/050908

(56) References cited:
- B.PRENEEL ET AL.: NESSIE SECURITY REPORT, PAGES I-VII, 178-201, 19 February 2003 (2003-02-19), XP002316503
- L.GRANBOULAN: "RSA hybrid encryption schemes"[Online] 2001, pages 1-14, XP002316504 Retrieved from the Internet: URL:citeseer.ist.psu.edu/granboulan01rsa.h tml> [retrieved on 2005-02-04]

## Description

This invention relates to a secure communication system.

More particularly, the invention relates to a secure communication system which enables a user of the system to send securely a message (the same message) to each of a plurality of other users of the system.

One known secure communication scheme is public key cryptography. Public key cryptography has traditionally been concerned with two parties communicating. Party A wishes to send data securely to party B. Party A encrypts the data with party B's public key. Party B decrypts the data using its private key (corresponding to its public key as used by party A).

Public key algorithms are very slow. Accordingly, if party A wishes to send a large amount of data to party B, party A first encrypts a symmetric session key with party B's public key, and transmits this to party B. Party A then encrypts the large amount of data using the fast symmetric cipher keyed by the session key. Such a combination of public key and symmetric techniques is termed a hybrid encryption algorithm.

In recent years, the hybrid approach has been developed by use of the so called KEM-DEM philosophy. A key encapsulation mechanism (KEM) utilises party B's public key pkB to provide both a symmetric session key K, and an encryption of K under pkB. This encryption will be denoted EB(K). A symmetric data encapsulation mechanism (DEM) then uses K to symmetrically encrypt the data (message) to be transmitted. This encryption will be denoted SEK(M). Party A transmits to party B both EB(K) and SEK(M). Party B recovers K from EB(K) using party B's private key skB, and then uses K to recover M from SEK(M).

Such a KEM-DEM cryptographic schema is described in B-PRENEEL et al :"NESSIE security report" , pages I-VII and 178-201, published on 19.02.2003, XP002316509.

The use of the KEM-DEM philosophy allows the different components of a hybrid encryption scheme to be designed in isolation, leading to simpler analysis and potentially more efficient schemes. However, problems occur when one departs from the traditional two-party setting. Party A may wish to send a large amount of data to two parties B and C. For example, party A may wish to encrypt an email to parties B and C, or encrypt a file on party A's computer to parties B and C. In this case, the KEM would: (i) utilise party B's public key pkB to provide both a symmetric session key KB, and an encryption of KB under pkB; and (ii) utilise party C's public key pkC to provide both a further symmetric session key KC, and an encryption of KC under pkC. The DEM would then: (i) use KB to symmetrically encrypt the large amount of data for party B; and (ii) use KC to symmetrically encrypt the large amount of data for party C. It will be seen that the data has been encrypted twice. This is clearly inefficient, particularly where the amount of data is large.

According to a first aspect of the present invention there is provided an encapsulator for providing (a) a session key, and (b) a plurality of asymmetric encryptions of the session key, each said encryption corresponding to a respective receiving location; and (ii) a symmetric encryptor for utilising said session key to encrypt a message; said encapsulator comprising: a pseudo random number generator; symmetric key derivation means for deriving said session key from a first random number generated by said pseudo random number generator; means for utilising said first random number to generate a second random number; and means for utilising the first keys of asymmetric encryption key pairs of intended recipients at receiving locations together with said second random number and said first random number to generate said plurality of asymmetric encryptions of the session key.

According to a second aspect of the present invention there is provided a decapsulator for decrypting the encryption of any one of a plurality of encryptions which correspond to a receiving location to provide a session key; and (ii) a symmetric decryptor for utilising the session key to decrypt the message, said decapsulator at each receiving location comprising: means for utilising the second key of the asymmetric encryption key pair of the recipient at the receiving location together with the asymmetric encryption corresponding to the receiving location to recover said first random number; and a further symmetric key derivation means for deriving said session key from said first random number.

According to a third aspect of the present invention there is provided an encryptor for providing a plurality of asymmetric encryptions of a message, wherein each said encryption may correspond to a respective receiving location on a network, said encryptor comprising: means for deriving from said message a first random number; and means for utilising the first keys of asymmetric encryption key pairs of intended recipients at the receiving locations together with said first random number and said message to generate said plurality of asymmetric encryptions of the message.

According to a fourth aspect of the present invention there is provided a decryptor for decrypting the encryption of a one of a plurality of encryptions which corresponds to a receiving location on a network to provide said message, said decryptor comprising means for utilising the second key of the asymmetric encryption key pair of a recipient at the receiving location together with the asymmetric encryption corresponding to the receiving location to recover the message.

According to a fifth aspect of the present invention there is provided a secure communication method comprising: (i) providing (a) a session key, and (b) a plurality of asymmetric encryptions of the session key, each said encryption corresponding to a respective receiving location on a network; and (ii) utilising said session key to encrypt symmetrically a message; said step (i) comprising: generating a first random number; deriving said session key from said first random number; utilising said first random number to generate a second random number; and utilising the first keys of asymmetric encryption key pairs of the intended recipients at the receiving locations together with said second random number and said first random number to generate said plurality of asymmetric encryptions of the session key.

According to a sixth aspect of the present invention there is provided a secure communication method comprising: (i) decrypting the encryption of said plurality of encryptions which corresponds to a receiving location to provide said session key; and (ii) utilising the session key to decrypt the message, said step (i) comprising: utilising the second key of an asymmetric encryption key pair of the recipient at the receiving location together with the asymmetric encryption corresponding to the receiving location to recover said first random number; and deriving said session key from said first random number.

According to a seventh aspect of the present invention there is provided a secure communication method comprising: providing a plurality of asymmetric encryptions of a message, each said encryption corresponding to a respective receiving location on a network, said step of providing said plurality of asymmetric encryptions comprising: deriving from said message a first random number; and utilising the first keys of asymmetric encryption key pairs of intended recipients at the receiving locations together with said first random number and said message to generate said plurality of asymmetric encryptions of the message.

According to an eighth aspect of the present invention there is provided secure communication method comprising: decrypting an encryption of a plurality of encryptions which corresponds to a receiving location to provide a message, said step of decrypting comprising utilising a second key of an asymmetric encryption key pair of a recipient at the receiving location together with the asymmetric encryption corresponding to the receiving location to recover the message.

The invention will now be described, by way of example, with reference to the accompanying drawings, in which:
Fig 1 is a block schematic diagram of a secure communication system;
Fig 2 is a block schematic diagram of an encapsulator of the system of Fig 1, which encapsulator is not in accordance with the present invention but is useful for understanding the present invention;
Fig 3 is a block schematic diagram of a decapsulator of the system of Fig 1, which decapsulator is not in accordance with the present invention but is useful for understanding the present invention;
Figs 4 and 5 illustrate an alternative encapsulator/decapsulator combination to that of Figs 2 and 3, which alternative encapsulator/decapsulator combination is in accordance with the present invention; and
Figs 6, 7 and 8 illustrate a modification to the secure communication systems of Figs 1 to 3, and Figs 1, 4 and 5, which modification is in accordance with the present invention.

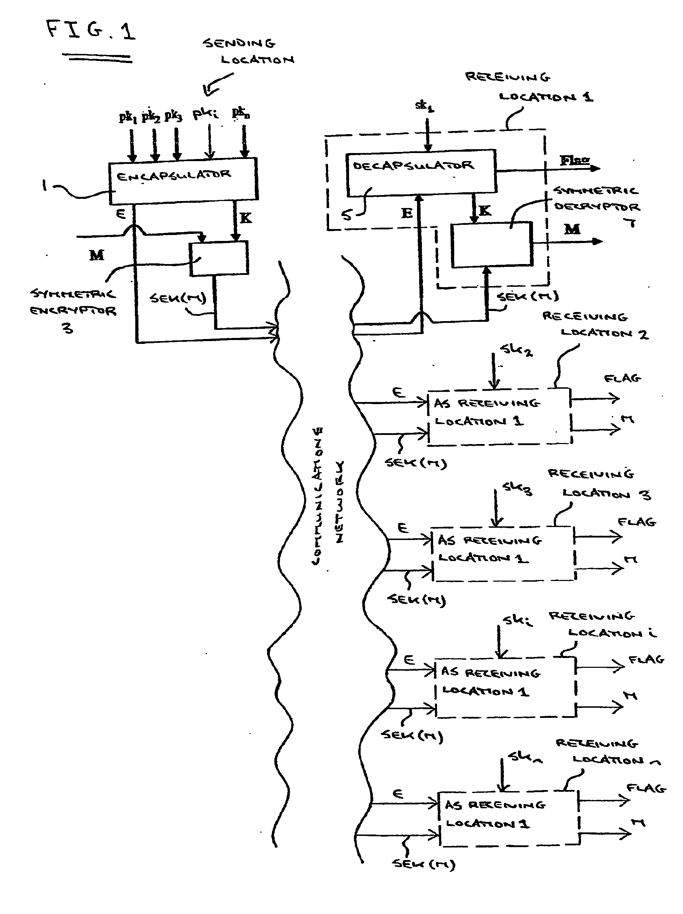

Referring to Fig 1, the communication system comprises: a communications network; at a sending location on the network, an encapsulator 1 and a symmetric encryptor 3; and, at each of a plurality of receiving locations 1, 2, 3 ... i ... n on the network, a decapsulator 5 and a symmetric decryptor 7.

A user located at the sending location wishes to send a message M (the same message) to each of the users located at receiving locations 1 to n. Each of the users at receiving locations 1 to n possesses a personal public/private key pair assigned as part of a public key cryptography communication scheme. The public/private keys assigned to the user located at receiving location 1 will be denoted pk1/sk1 respectively, the public/private keys assigned to the user located at receiving location 2 will be denoted pk2/sk2 respectively, etc.

At the sending location, public keys pk1, pk2, pk3 ... pki ... pkn are supplied to encapsulator 1, which utilises the keys to provide respective encryptions of a session key K, i.e. encapsulator 1 provides an encryption of session key K utilising public key pk1, an encryption of session key K utilising public key pk2, etc. The encryption of K utilising pk1 will be denoted E1(K), the encryption of K utilising pk2 will be denoted E2(K), etc. Thus, encapsulator 1 provides E = E1(K), E2(K), E3(K) ... Ei(K) ... En(K). Encapsulator 1 also provides session key K in unencrypted form.

The message M to be sent is supplied to symmetric encryptor 3. Symmetric encryptor 3 utilises the session key K in unencrypted form provided by encapsulator 1 to symmetrically encrypt message M. The symmetric encryption of M utilising K will be denoted SEK(M).

By means of the communications network, the sending location transmits E = E1(K), E2(K), E3(K) ... Ei(K) ... En(K), and SEK(M) to each of receiving locations 1 to n.

At receiving location 1, the private key sk1 of the user at that location is supplied to decapsulator 5. Decapsulator 5 is also in receipt of transmitted E, and uses sk1 to decrypt that part of E encrypted using the public key pk1 corresponding to sk1, i.e. decapsulator 5 uses sk1 to decrypt E1(K) to provide session key K. Decapsulator 5 also provides a Flag to specify whether the decryption was successful. Session key K is supplied to symmetric decryptor 7. Symmetric decryptor 7 is also in receipt of transmitted SEK(M), and uses K to decrypt SEK(M) to recover message M.

Each of receiving locations 2 to n operates in the same manner as receiving location 1 to recover the message M for the user at the location. Thus: the decapsulator at receiving location 2 uses sk2 to decrypt E2(K) to provide K, which in turn is used by the symmetric decryptor at location 2 to decrypt SEK(M) to recover M; receiving location 3 uses sk3 to decrypt E3(K) to provide K, which is used to decrypt SEK(M) to recover M; etc.

It will be noted that the system of Fig 1 requires only one symmetric encryption of the message to be sent, i.e. one and the same symmetric encryption of the message is sent to all receiving locations (SEK(M) is sent to all receiving locations).

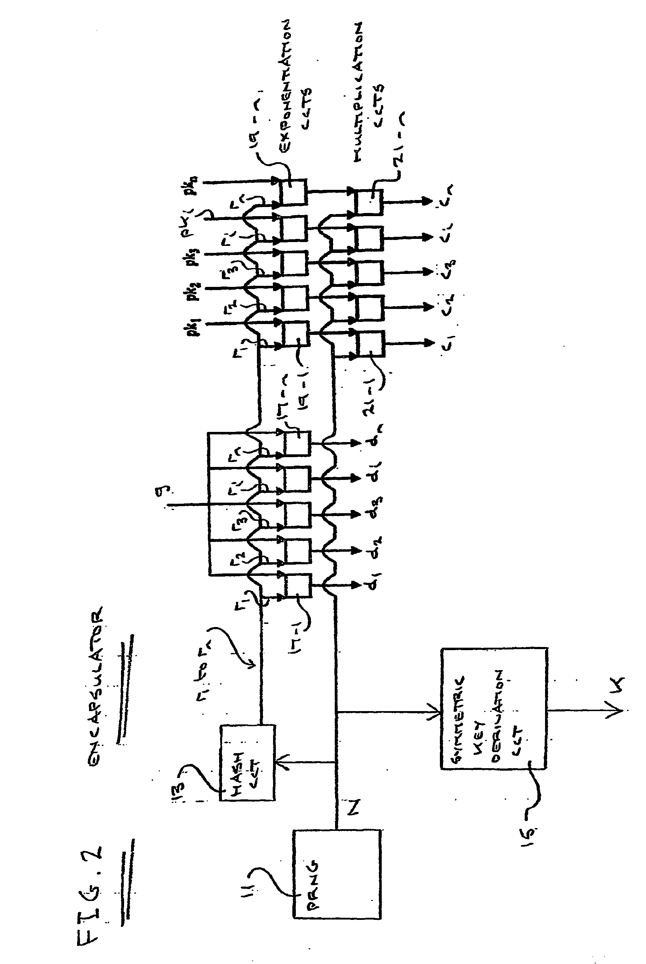

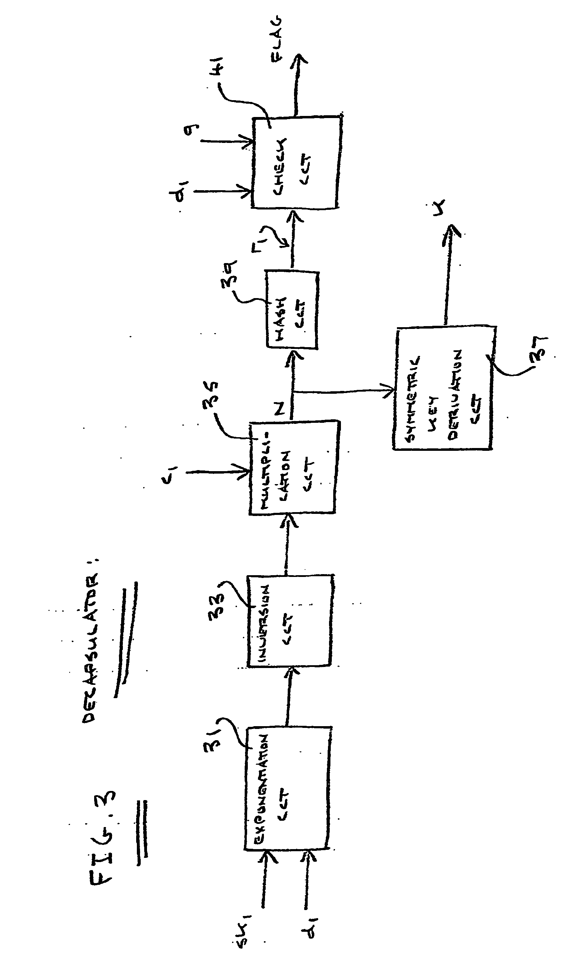

Referring to Fig 2, encapsulator 1 of Fig 1 comprises a pseudo random number generator (PRNG) 11, a hash circuit 13, a symmetric key derivation circuit 15, a first series of exponentiation circuits 17-1 to 17-n, a second series of exponentiation circuits 19-1 to 19-n, and a series of multiplication circuits 21-1 to 21-n.

PRNG 11 generates a pseudo random number N which is used: (i) by hash circuit 13 to generate a series of random numbers r1 r2, r3 ... ri ...rn; and (ii) by symmetric key derivation circuit 15 to derive symmetric key K. As shown in Fig 1, symmetric key K is supplied to symmetric encryptor 3. Random number r1 is supplied to exponentiation circuits 17-1 and 19-1, random number r2 is supplied to exponentiation circuits 17-2 and 19-2, etc. Random number N is supplied to each of multiplication circuits 21-1 to 21-n.

In addition to being supplied with a random number ri: (i) each of the first series of exponentiation circuits 17-1 to 17-n is supplied with a fixed system parameter g (g generates the required group, which could, for example, be a multiplicative group of a finite field or an elliptic curve); and (ii) each of the second series of exponentiation circuits 19-1 to 19-n is supplied with a respective public key pk1 to pkn, i.e. pk1 is supplied to circuit 19-1, pk2 is supplied to circuit 19-2, etc. Each of the first series of exponentiation circuits 17-1 to 17-n raises g to the power of the ri supplied to the circuit to provide di, i.e. circuit 17-1 raises g to the power of r1 to provide d1 = g^r1, circuit 17-2 raises g to the power of r2 to provide d2 = g^r2, etc. Each of the second series of exponentiation circuits 19-1 to 19-n raises the pki supplied to it by the ri supplied to it, i.e. circuit 19-1 raises pk1 to the power of r1 to provide pk1^r1, circuit 19-2 raises pk2 to the power of r2 to provide pk2^r2, etc. The output of exponentiation circuit 19-1 is supplied to multiplication circuit 21-1, the output of exponentiation circuit 19-2 is supplied to multiplication circuit 21-2, etc.

Multiplication circuit 21-1 multiplies the N supplied to it by the output of exponentiation circuit 19-1 to provide c1 = N.(pkl^r1), multiplication circuit 21-2 multiplies the N supplied to it by the output of exponentiation circuit 19-2 to provide c2 = N.(pk2^r2), etc.

The outputs c1 and d1 taken together constitute E1(K), the outputs c2 and d2 taken together constitute E2(K), etc.

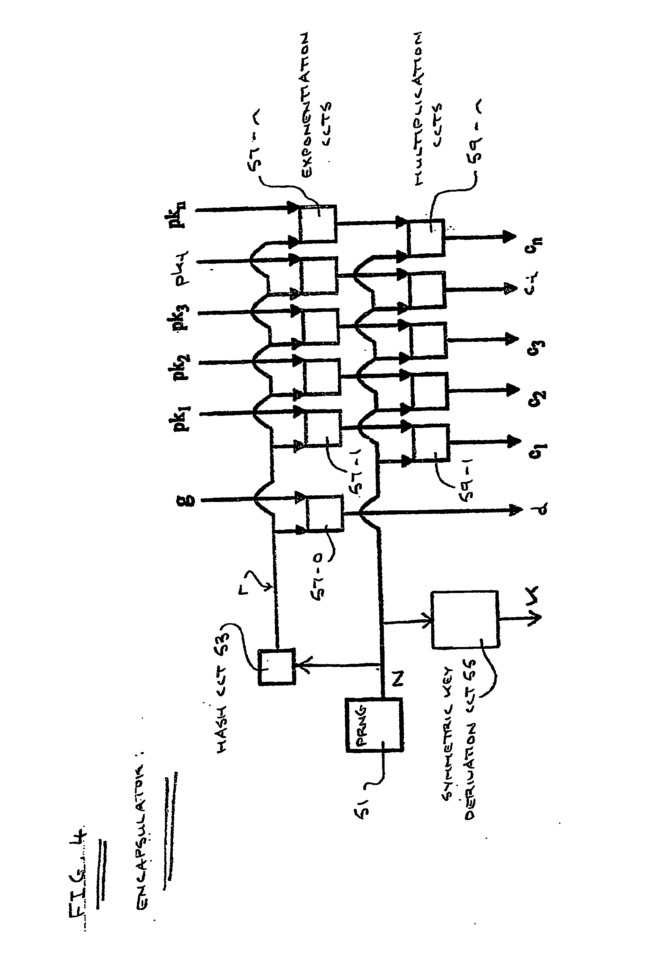

Referring to Fig 3, decapsulator 5 of Fig 1 comprises an exponentiation circuit 31, an inversion circuit 33, a multiplication circuit 35, a symmetric key derivation circuit 37, a hash circuit 3 9, and a check circuit 41.

Decapsulator 5 utilises sk1 to decrypt E1(K) (constituted by c1 and d1) to provide session key K. Decapsulator 5 also provides a Flag to specify whether the decryption was successful.

Exponentiation circuit 31 raises d1 to the power of sk1, i.e. circuit 31 provides d1^sk1. Inversion circuit 33 provides 1/(d1^sk1). Multiplication circuit 35 multiplies 1/(d1^sk1) by c1 to provide c1/(d1^sk1). Now, c1 = N.(pk1^r1), and d1 = g^r1, see earlier. Substituting gives the output of circuit 35 as N.(pk1^r1)/g^(r1.sk1). Now, from public key cryptography, pk1 = g^sk1. Substituting gives the output of circuit 35 as N.(g^(r1.sk1))/g^(r1.sk1) = N. N is supplied to symmetric key derivation circuit 37, which circuit is the same as circuit 15 in Fig 2. This provides the recovered session key K. N is also supplied to hash circuit 39, which circuit is the same as circuit 13 of Fig 2. Check circuit 41 raises g to the power of r1 as provided by circuit 39, i.e. circuit 41 provides g^r1. Now, d1 = g^r1, see earlier. Check circuit 41 compares the calculated g^r1 with d1 supplied to circuit 41. If they are the same, decryption was successful, otherwise it was not.

The operation of the decapsulators of receiving locations 2 to n of Fig 1 is precisely analogous to that of decapsulator 5 of receiving location 1.

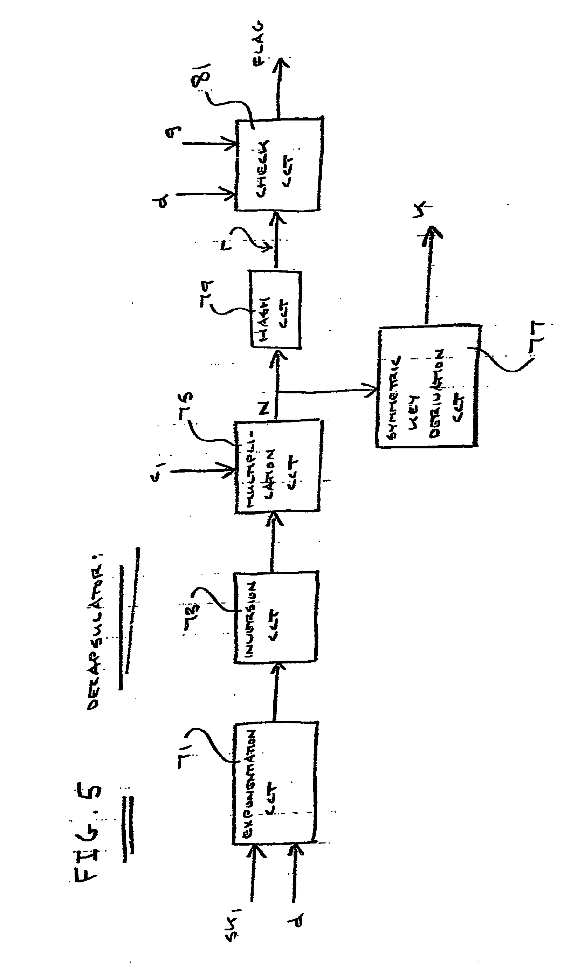

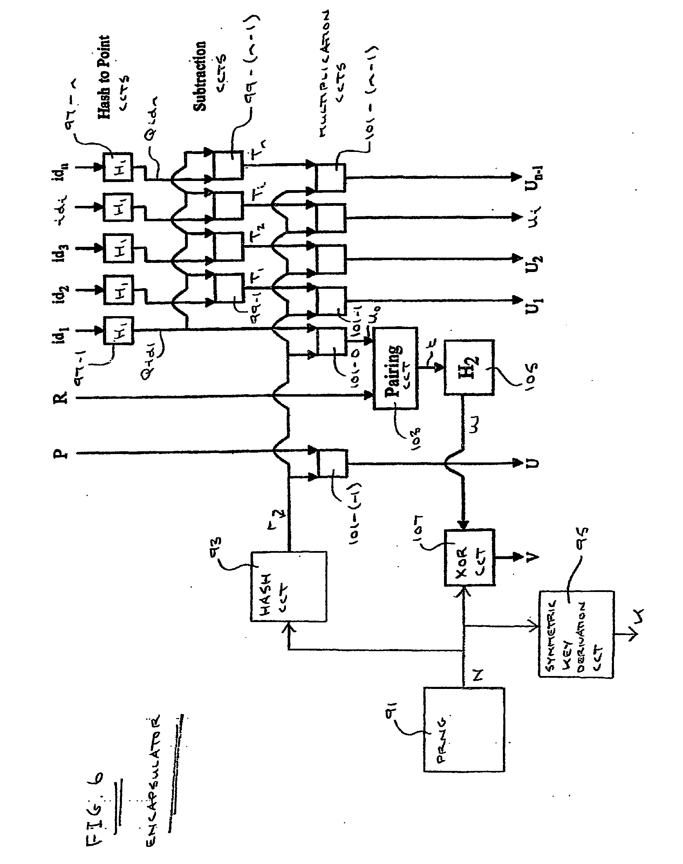

The encapsulator/decapsulator combination of Figs 4 and 5 is based on the so called ElGamal encryption scheme.

The encapsulator of Fig 4 comprises a PRNG 51, a hash circuit 53, a symmetric key derivation circuit 55, a series of exponentiation circuits 57-0 to 57-n, and a series of multiplication circuits 59-1 to 59-n.

PRNG 51 generates a pseudo random number N which is used: (i) by hash circuit 53 to generate a single random number r; and (ii) by symmetric key derivation circuit 55 to derive symmetric key K. As shown in Fig 1, symmetric key K is supplied to symmetric encryptor 3. Random number r is supplied to each of exponentiation circuits 57-0 to 57-n. Random number N is supplied to each of multiplication circuits 59-1 to 59-n.

In addition to being supplied with random number r: (i) exponentiation circuit 57-0 is supplied with a fixed system parameter g; and (ii) each of exponentiation circuits 57-1 to 57-n is supplied with a respective public key pk1 to pkn, i.e. pk1 is supplied to circuit 57-1, pk2 is supplied to circuit 57-2, etc. Exponentiation circuit 57-0 raises g to the power of r to provide d = g^r. Each of exponentiation circuits 57-1 to 57-n raises the pki supplied to it by r, i.e. circuit 57-1 raises pk1 to the power of r to provide pk1^r, circuit 57-2 raises pk2 to the power of r to provide pk2^r, etc. The output of exponentiation circuit 57-1 is supplied to multiplication circuit 59-1, the output of exponentiation circuit 57-2 is supplied to multiplication circuit 59-2, etc.

Multiplication circuit 59-1 multiplies the N supplied to it by the output of exponentiation circuit 57-1 to provide c1 = N.(pk1^r), multiplication circuit 59-2 multiplies the N supplied to it by the output of exponentiation circuit 57-2 to provide c2 = N.(pk2^r), etc.

The outputs c1 and d taken together constitute E1 (K), the outputs c2 and d taken together constitute E2(K), etc.

The decapsulator of Fig 5 comprises an exponentiation circuit 71, an inversion circuit 73, a multiplication circuit 75, a symmetric key derivation circuit 77, a hash circuit 79, and a check circuit 81.

The decapsulator utilises sk1 to decrypt E1(K) (constituted by c1 and d) to provide session key K. The decapsulator also provides a Flag to specify whether the decryption was successful.

Exponentiation circuit 71 raises d to the power of sk1, i.e. circuit 71 provides d^sk1. Inversion circuit 73 provides 1/(d^sk1). Multiplication circuit 75 multiplies 1/(d^sk1) by c1 to provide c1/(d^sk1). Now, c1 = N.(pk1^r), and d = g^r, see earlier. Substituting gives the output of circuit 75 as N.(pk1^r)/g^(r.sk1). Now, from public key cryptography, pk1 = g^sk1. Substituting gives the output of circuit 75 as N.(g^(r.sk1))/g^(r.sk1) = N. N is supplied to symmetric key derivation circuit 77, which circuit is the same as circuit 55 in Fig 4. This provides the recovered session key K. N is also supplied to hash circuit 79, which circuit is the same as circuit 53 of Fig 4. Check circuit 81 raises g to the power of r as provided by circuit 79, i.e. circuit 81 provides g^r. Now, d = g^r, see earlier. Check circuit 81 compares the calculated g^r with d supplied to circuit 81. If they are the same, decryption was successful, otherwise it was not.

The operation of the decapsulators of receiving locations 2 to n of Fig 1 is precisely analogous to that of the decapsulator of receiving location 1 shown in Fig 5.

It will be seen that the encapsulator/decapsulator combination of Figs 4 and 5 is far more efficient than the encapsulator/decapsulator combination of Figs 2 and 3. In particular, the combination of Figs 2 and 3 requires series of random numbers r1 to rn (one random number in respect of each intended recipient), whereas the combination of Figs 4 and 5 requires only one random number r (used for all recipients). The encapsulator of Fig 2 provides the encryptions E1(K) to En(K) utilising public keys pk1 to pkn, random number N, and random numbers r1 to rn (derived from N). The encapsulator of Fig 4 provides the encryptions E1(K) to En(K) utilising public keys pk1 to pkn, random number N, and single random number r (derived from N).

If the amount of data to be sent is relatively low, the encapsulator/decapsulator combination of Figs 4 and 5 can be used without the need for symmetric encryption by a separate symmetric encryptor as symmetric encryptor 3 of Fig 1. In such case, referring to Fig 4: (i) PRNG 51 and symmetric key derivation circuit 55 would be dispensed with; and (ii) the message to be sent M would replace N, i.e. M instead of N would be supplied to hash circuit 53 and each of multiplication circuits 59-1 to 59-n. Referring to Fig 5: (i) symmetric key derivation circuit 77 would be dispensed with; and (ii) M instead of N would be recovered by multiplication circuit 75. If this encryption/decryption scheme is used, then, for security, it should be combined with the Fujisaki-Okamoto transform, or similar defence against attack. For the Fujisaki-Okamoto transform, see E. Fujisaki and T. Okamoto, Secure integration of asymmetric and symmetric encryption schemes, Advances in Cryptology - CRYPTO 1999, Springer-Verlag LNCS 1666, 537-554, 1999.

In the above secure communication systems of Figs 1 to 3, and Figs 1, 4 and 5, the encapsulator is supplied with the public keys of the intended recipients (each intended recipient possesses a personal public/private key pair assigned as part of a public key cryptography communication scheme). This requires knowledge on the part of the sending party of the public keys of all the intended recipients. There will now be described a modification to the above systems, which modification avoids the requirement to have knowledge of the public keys of the intended recipients. In the modification, so called identity based keys id1, id2, id3 ... idi ... idn must be supplied to the encapsulator. An identity based key idi could, for example, be based on an intended recipient's email address, name or phone number.

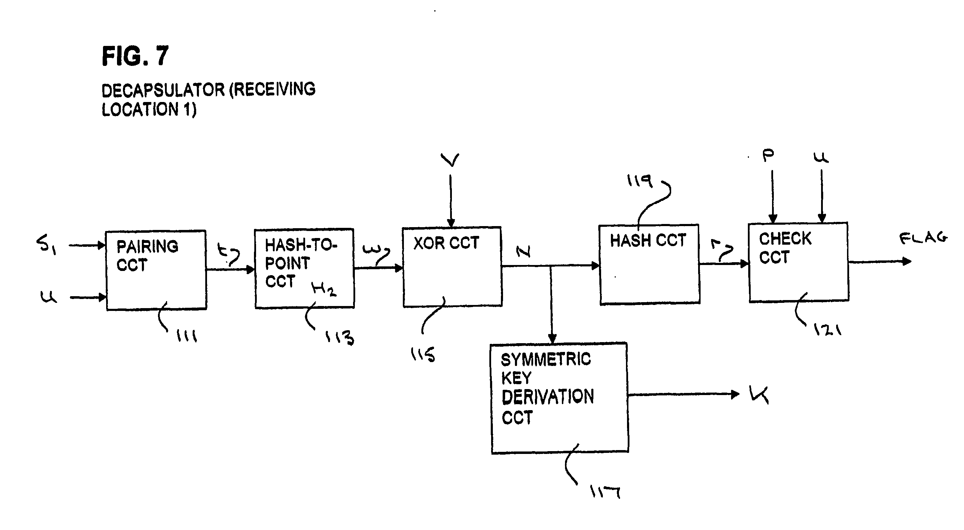

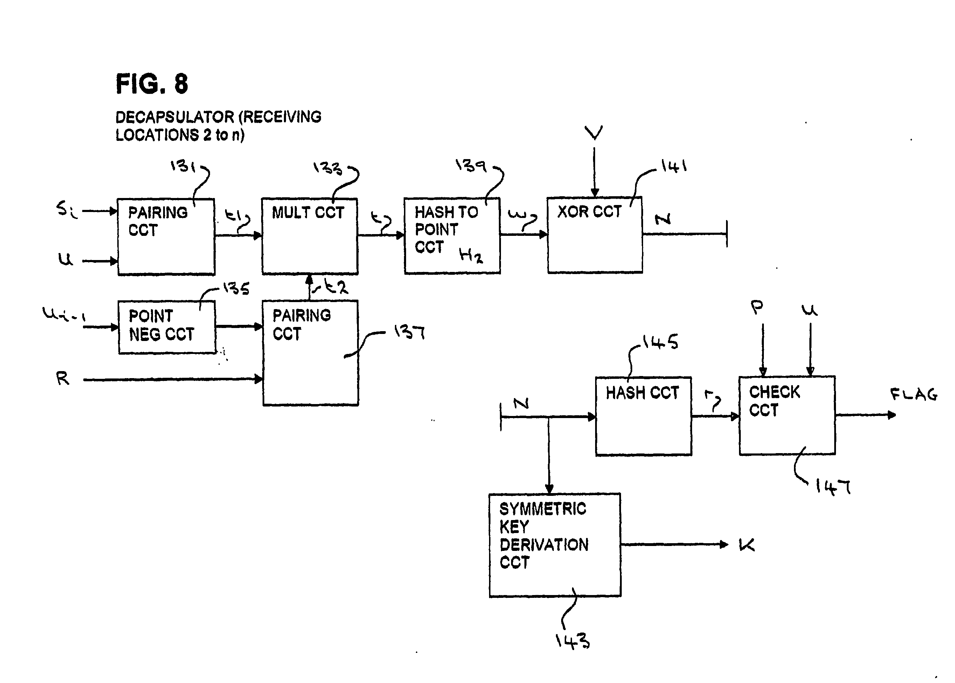

Figs 6, 7 and 8 illustrate an encapsulator/decapsulator combination. This combination is based on the so called Boneh-Franklin encryption scheme, see D. Boneh and M. Franklin, Identity based encryption from the Weil pairing, Advances in Cryptology - CRYPTO 2001, Springer-Verlag LNCS 2139, 213-229, 2001. Fig 6 illustrates the encapsulator located at the sending location. Fig 7 illustrates the decapsulator located a receiving location 1 only. Fig 8 illustrates the decapsulator located at each of receiving locations 2 to n.

The encapsulator of Fig 6 comprises a PRNG 91, a hash circuit 93, a symmetric key derivation circuit 95, a series of first hash-to-point circuits 97-1 to 97-n, a series of subtraction circuits 99-1 to 99-(n-1), a series of multiplication circuits 101-(-1) to 101-(n-1), a pairing circuit 103, a second hash-to-point circuit 105, and an exclusive-OR (XOR) circuit 107.

PRNG 91 generates a pseudo random number N which is used: (i) by hash circuit 93 to generate a single random number r; and (ii) by symmetric key derivation circuit 95 to derive symmetric key K. As shown in Fig 1, symmetric key K is supplied to symmetric encryptor 3. Random number r is supplied to each of multiplication circuits 101-(-1) to 101-(n-1). Random number N is supplied to XOR circuit 107.

Each of first hash-to-point circuits 97-1 to 97-n is supplied with a respective identity key id1 to idn, i.e. id1 is supplied to circuit 97-1, id2 is supplied to circuit 97-2, etc. Hash-to-point circuit 97-1 implements a first hash-to-point algorithm H1 to provide Qid1, hash-to-point circuit 97-2 implements the same first hash-to-point algorithm H1 to provide Qid2, etc. Qid1 is supplied to multiplication circuit 101-0, and each of subtraction circuits 99-1 to 99-(n-1). Qid2 is supplied to subtraction circuit 99-1, Qid3 is supplied to subtraction circuit 99-2, etc.

Utilising Qid1 and Qid2, subtraction circuit 99-1 implements a subtraction algorithm SUB to provide T1, utilizing Qid1 and Qid3, subtraction circuit 99-2 implements the same subtraction algorithm SUB to provide T2, etc. T1 is supplied to multiplication circuit 101-1, T2 is supplied to multiplication circuit 101-2, etc.

Utilising r and P (a fixed system parameter which generates the required group), multiplication circuit 101-(-1) implements a multiplication algorithm MULT to provide U. Utilising r and Qid1, multiplication circuit 101-0 implements the same multiplication algorithm MULT to provide U0. Utilising r and T1, multiplication circuit 101-1 implements MULT to provide U1, utilising r and T2, multiplication circuit 101-2 implements MULT to provide U2, etc.

Utilising R (the public key of the trust authority providing the secure communication scheme) and U0, pairing circuit 103 implements a pairing algorithm PAIR to provide t to second hash-to-point circuit 105. Second hash-to-point circuit 105 implements a second hash-to-point algorithm H2 to provide W to XOR circuit 107. XOR circuit 107 XORs N and W to provide V (the XOR of circuit 107 could be replaced by any arbitrary symmetric encryption function).

The outputs U and V taken together constitute E1(K) as transmitted by the sending location in Fig 1. The outputs U1, U and V taken together constitute E2(K) as transmitted by the sending location in Fig 1, the outputs U2, U and V taken together constitute E3(K) as transmitted by the sending location in Fig 1, the outputs U3, U and V taken together constitute E4(K) as transmitted by the sending location in Fig 1, etc.

The decapsulator of Fig 7 comprises a pairing circuit 111, a hash-to-point circuit 113, an XOR circuit 115, a symmetric key derivation circuit 117, a hash circuit 119, and a check circuit 121.

The decapsulator utilises the secret key S1 (assigned by the trust authority) of the user at location 1 to decrypt E1(K) (constituted by U and V) to provide session key K. The decapsulator also provides a Flag to specify whether the decryption was successful.

Utilising S 1 and U, pairing circuit 111 implements pairing algorithm PAIR (the same pairing algorithm as implemented by pairing circuit 103 of Fig 6) to provide t to hash-to-point circuit 113. Hash-to-point circuit 113 implements second hash-to-point algorithm H2 (the same hash-to-point algorithm as implemented by second hash-to-point circuit 105 of Fig 6) to provide W to XOR circuit 115. XOR circuit 115 XORs W and V to provide N. N is supplied to symmetric key derivation circuit 117, which circuit is the same as circuit 95 of Fig 6. This provides the recovered session key K. N is also supplied to hash circuit 119, which circuit is the same as circuit 93 of Fig 6. This provides r. Utilising r and P, check circuit 121 implements multiplication algorithm MULT (the same multiplication algorithm as implemented by multiplication circuit 101-(-1) of Fig 6). Now, in Fig 6, multiplication circuit 101-(-1), utilising r and P, provides U. Check circuit 121 compares the result of its implementation of MULT with U supplied to circuit 121. If they are the same, decryption was successful, otherwise it was not. The decapsulator of Fig 8 comprises a first pairing circuit 131, a multiplication circuit 133, a point negation circuit 135, a second pairing circuit 137, a hash-to-point circuit 139, an XOR circuit 141, a symmetric key derivation circuit 143, a hash circuit 145, and a check circuit 147.

The decapsulator utilises the secret key Si (1 < i ≤ n) of the user at location i to decrypt Ei(K) (constituted by U(i-1), U and V) to provide session key K. The decapsulator also provides a Flag to specify whether the decryption was successful.

Utilising Si and U, first pairing circuit 131 implements pairing algorithm PAIR (the same pairing algorithm as implemented by pairing circuit 103 of Fig 6) to provide t1 to multiplication circuit 133. Utilising U(i-1) (supplied via point negation circuit 135 which implements a point negation algorithm) and R, second pairing circuit 137 also implements pairing algorithm PAIR to provide t2 to multiplication circuit 133. Multiplication circuit 133 implements multiplication algorithm MULT (the same multiplication algorithm as implemented by multiplication circuits 101-(-1) to 101-(n-1) of Fig 6) to provide t to hash-to-point circuit 139. Hash-to-point circuit 139 implements second hash-to-point algorithm H2 (the same hash-to-point algorithm as implemented by second hash-to-point circuit 105 of Fig 6) to provide W to XOR circuit 141. XOR circuit 141 XORs W and V to provide N. N is supplied to symmetric key derivation circuit 143, which circuit is the same as circuit 95 of Fig 6. This provides the recovered session key K. N is also supplied to hash circuit 145, which circuit is the same as circuit 93 of Fig 6. This provides r. Utilising r and P, check circuit 147 implements multiplication algorithm MULT (the same multiplication algorithm as implemented by multiplication circuit 101-(-1) of Fig 6). Now, in Fig 6, multiplication circuit 101-(-1), utilising r and P, provides U. Check circuit 147 compares the result of its implementation of MULT with U supplied to circuit 147. If they are the same, decryption was successful, otherwise it was not.

It will be seen that the encapsulator/decapsulator combination of Figs 6, 7 and 8 is again efficient in that it requires only one random number r (used for all recipients). The encapsulator of Fig 6 provides the encryptions E1(K) to En(K) utilising identity keys id1 to idn, random number N, and single random number r (derived from N).

If the amount of data to be sent is relatively low, the encapsulator/decapsulator combination of Figs 6, 7 and 8 can be used without the need for symmetric encryption by a separate symmetric encryptor as symmetric encryptor 3 of Fig 1. In such case, referring to Fig 6: (i) PRNG 91 and symmetric key derivation circuit 95 would be dispensed with; and (ii) the message to be sent M would replace N, i.e. M instead ofN would be supplied to hash circuit 93 and XOR circuit 107. Referring to Fig 7: (i) symmetric key derivation circuit 117 would be dispensed with; and (ii) M instead of N would be recovered by XOR circuit 115. Referring to Fig 8: (i) symmetric key derivation circuit 143 would be dispensed with; and (ii) M instead of N would be recovered by XOR circuit 141. If this encryption/decryption scheme is used, then, for security, it should be combined with the Fujisaki-Okamoto transform, or similar defence against attack.

Although the above description concerns two types of asymmetric cryptography, public key and identity based, it is to be appreciated that the present invention is not so limited, and applies also to other types of asymmetric cryptography.

## Claims

1. An encapsulator (1) for providing (a) a session key (K), and (b) a plurality of asymmetric encryptions of the session key (E1(K), E2(K), E3(K)... Ei(K)... En(K)), each said encryption corresponding to a respective receiving location (1 to n); and (ii) a symmetric encryptor (3) for utilising said session key (K) to encrypt a message (M); said encapsulator (1) comprising: a pseudo random number generator(51 or 91); symmetric key derivation means (55 or 95) for deriving said session key (K) from a first random number (N) generated by said pseudo random number generator (51 or 91); means (53 or 93) for utilising said first random number (N) to generate a second random number (r); and means (57-0 to 57-n and 59-1 to 59-n, or 97-1 to 97-n and 99-1 to99- (n-1) and101- (-1) to101-(n-1) and 103 and 105 and 107) for utilising the first keys (pk1 to pkn, or idl to idn) of asymmetric encryption key pairs (pk1 to pkn and sk1 to skn, or idl to idn and Sl to Sn) of intended recipients at receiving locations(1 to n) together with said second random number (r) and said first random number (N) to generate said plurality of asymmetric encryptions of the session key (E1(K), E2(K), E3(K)... Ei (K) ... En (K)).

2. A decapsulator (5) for decrypting the encryption of any one of a plurality of encryptions (E1(K), E2(K), E3(K)... Ei(K)... En(K) ) which correspond to a receiving location (1 to n) to provide a session key (K); and (ii) a symmetric decryptor (7) for utilising the session key (K) to decrypt the message (M), said decapsulator (5) at each receiving location (1 to n) comprising: means (71, 73, 75, or 111, 113, 115 or 131, 133, 135, 137, 139, 141) for utilising the second key (ski or Si) of the asymmetric encryption key pair (pki and ski, or idi and Si) of the recipient at the receiving location together with the asymmetric encryption (Ei(K)) corresponding to the receiving location to recover said first random number (N); and a further symmetric key derivation means (77, or 117 or 143) for deriving said session key (K) from said first random number (N).

3. An encryptor (1) for providing a plurality of asymmetric encryptions of a message (M), wherein each said encryption may correspond to a respective receiving location (1 to n) on a network, said encryptor comprising: means (53 or 93) for deriving from said message (M) a first random number (r); and means (57-0 to 57-n and 59-1 to 59-n, or 97-1 to 97-n and 99-1 to 99-(n-1) and 101-(-1) to 101-(n-1) and 103 and 105 and 107) for utilising the first keys (pk1 to pkn, or idl to idn) of asymmetric encryption key pairs (pkl to pkn and skl to skn, or idl to idn and S1 to Sn) of intended recipients at the receiving locations (1 to n) together with said first random number (r) and said message (M) to generate said plurality of asymmetric encryptions of the message.

4. A decryptor (5) for decrypting the encryption of a one of a plurality of encryptions which corresponds to a receiving location (1 to n) on a network to provide said message (M), said decryptor (5) comprising means (71, 73, 75, or 111, 113, 115 or 131, 133, 135, 137, 139, 141) for utilising the second key (ski or Si) of the asymmetric encryption key pair (pki and ski, or idi and Si) of a recipient at the receiving location together with the asymmetric encryption corresponding to the receiving location to recover the message (M).

5. An encryptor according to claim 3 wherein: said first and second keys (pk1 to pkn, sk1 to skn) comprise public and private keys (pk1 to pkn, sk1 to skn) assigned to the recipients as part of a public key cryptography communication scheme; said means (57-0 to 57-n, 59-1 to 59-n) for utilising the public keys (pk1 to pkn) comprises: a series of first exponentiation means (57-0 to 57-n), one of said first exponentiation means (57-0) raising a fixed system parameter (g) to the power of said first random number (r) to provide a first output (d), each of the remainder of said first exponentiation means (57-1 to 57-n) raising a respective public key (pkl to pkn) to the power of said first random number (r) to provide a second output (pki^r); and a series of first multiplication means (59-1 to 59-n), each first multiplication means (59-1 to 59-n) multiplying a respective said second output (pki^r) by said message (M) to provide a third output (ci), said third outputs (ci) of said first multiplication means (59-1 to 59-n) together with said first output (d) of said one of said first exponentiation means (57-0) constituting said plurality of asymmetric encryptions of the message (M); and said means (71, 73, 75) for utilising the private key (ski) comprises: second exponentiation means (71) for raising said first output (d) to the power of the private key (ski); inversion means (73) for inverting the output (d^ski) of said second exponentiation means (71); and a second multiplication means (75) for multiplying the output (1/ (d^ski)) of said inversion means (73) by the said third output (ci) corresponding to the receiving location (1 to n), said second multiplication means (75) thereby recovering the message (M).

6. An encryptor according to claim 3 wherein: said first keys (idl to idn) comprise identity keys (idl to idn) based on the identities of the recipients; said second keys (S1 to Sn) comprise corresponding secret keys (S 1 to Sn) assigned to the recipients as part of an identity based cryptography communication scheme; said means (97-1 to 97-n, 99-1 to 99-(n-1), 101-(-1) to 101-(n-1), 103, 105, 107) for utilising the identity keys (idl to idn) comprises: a series of first hash-to-point means (97-1 to 97-n), one of said first hash-to-point means (97-1) utilising one of the identity keys (idl) to implement a first hash-to-point algorithm (H1) to provide a first output (Qidl), each remaining said first hash-to-point means (97-2 to 97-n) utilising a respective remaining identity key (id2 to idn) to implement said first hash-to-point algorithm (Hl) to provide a second output (Qid2 to Qidn); a series of subtraction means (99-1 to 99-(n-1)), each said subtraction means (99-1 to 99-(n-1)) utilising said first output (Qidl) together with a respective said second output (Qid2 to Qidn) to implement a subtraction algorithm (SUB) to provide a third output (Tl to Tn); a series of first multiplication means (101-(-1) to 101-(n-1)), one of said first multiplication means (101-(-1)) utilising said first random number (r) and a fixed system parameter (P) to implement a multiplication algorithm (MULT) to provide a fourth output (U), another of said first multiplication means (101-0) utilising said first random number (r) and said first output (Qidl) to implement said multiplication algorithm (MULT) to provide a fifth output (U0), each remaining said first multiplication means (101-1 to 101-(n-1)) utilising said first random number (r) together with a respective said third output (T1 to Tn) to implement said multiplication algorithm (MULT) to provide a sixth output (U1 to U(n-1)); first pairing means (103) for utilising a publicly available key (R) together with said fifth output (U0) to implement a pairing algorithm (PAIR) to provide a seventh output (t); second hash-to-point means (105) for utilising said seventh output (t) to implement a second hash-to-point algorithm (H2) to provide an eighth output (W); and symmetric encryption means (107) for utilising said message (M) together with said eighth output (W) to implement a symmetric encryption function to provide a ninth output (V), said fourth, sixth and ninth outputs (U, Ul to U(n-1), V) together constituting said plurality of asymmetric encryptions of the message (M).

7. A decryptor according to claim 4 operative in a cryptography system comprising an encryptor according to claim 6, wherein said means (111, 113, 115 or 131, 133, 135, 137, 139, 141) for utilising the secret key (Si) comprises: at one receiving location (1) of said receiving locations (1 to n): second pairing means (111) for utilising the secret key (S1) of the recipient at the receiving location (1) together with said fourth output (U) to implement said pairing algorithm (PAIR) to provide a tenth output (t); third hash-to-point means (113) for utilising said tenth output (t) to implement said second hash-to-point algorithm (H2) to provide an eleventh output (W); and symmetric decryption means (115) for utilising said eleventh output (W) together with said ninth output (V) to implement a symmetric decryption function corresponding to said symmetric encryption function to recover said message (M); and at each remaining receiving location (2 to n): third pairing means (131) for utilising the secret key (Si(1< i ≤ n) ) of the recipient at the receiving location (2 to n) together with said fourth output (U) to implement said pairing algorithm (PAIR) to provide a twelfth output (tl); point negation means (135) for utilising the said sixth output (U1 to U(n-1)) corresponding to the receiving location (2 to n) to implement a point negation algorithm to provide a thirteenth output; fourth pairing means (137) for utilising said thirteenth output together with said publicly available key (R) to implement said pairing algorithm (PAIR) to provide a fourteenth output (t2); second multiplication means (133) for utilising said twelfth and fourteenth outputs (t1, t2) to implement said multiplication algorithm (MULT) to provide a fifteenth output (t); fourth hash-to-point means (139) for utilising said fifteenth output (t) to implement said second hash-to-point algorithm (H2) to provide a sixteenth output (W); and further symmetric decryption means (141) for utilising said sixteenth output (W) together with said ninth output (V) to implement a symmetric decryption function corresponding to said symmetric encryption function to recover said message (M).

8. A secure communication method comprising: (i) providing (a) a session key (K), and (b) a plurality of asymmetric encryptions of the session key (E1(K), E2(K), E3(K)... Ei(K)... En(K)), each said encryption corresponding to a respective receiving location (1 to n) on a network; and (ii) utilising said session key (K) to encrypt symmetrically a message (M); said step (i) comprising: generating a first random number (N); deriving said session key (K) from said first random number (N) ; utilising said first random number (N) to generate a second random number (r); and utilising the first keys (pkl to pkn, or idl to idn) of asymmetric encryption key pairs (pkl to pkn and ski to skn, or idl to idn and S 1 to Sn) of the intended recipients at the receiving locations (1 to n) together with said second random number (r) and said first random number (N) to generate said plurality of asymmetric encryptions of the session key (E1(K), E2(K), E3(K)... Ei(K) ... En(K)) .

9. A secure communication method comprising: (i) decrypting the encryption of said plurality of encryptions (E1(K), E2(K), E3(K)... Ei(K)... En(K)) which corresponds to a receiving location (1 to n) to provide said session key (K); and (ii) utilising the session key (K) to decrypt the message (M), said step (i) comprising: utilising the second key (ski or Si) of an asymmetric encryption key pair (pki and ski, or idi and Si) of the recipient at the receiving location together with the asymmetric encryption (Ei(K)) corresponding to the receiving location to recover said first random number (N); and deriving said session key (K) from said first random number (N).

10. A secure communication method comprising: providing a plurality of asymmetric encryptions of a message (M), each said encryption corresponding to a respective receiving location (1 to n) on a network, said step of providing said plurality of asymmetric encryptions comprising: deriving from said message (M) a first random number (r); and utilising the first keys (pk1 to pkn, or idl to idn) of asymmetric encryption key pairs (pkl to pkn and skl to skn, or idl to idn and S1 to Sn) of intended recipients at the receiving locations (1 to n) together with said first random number (r) and said message (M) to generate said plurality of asymmetric encryptions of the message.

11. A secure communication method comprising: decrypting an encryption of a plurality of encryptions which corresponds to a receiving location (1 to n) to provide a message (M), said step of decrypting comprising utilising a second key (ski or Si) of an asymmetric encryption key pair (pki and ski, or idi and Si) of a recipient at the receiving location together with the asymmetric encryption corresponding to the receiving location to recover the message (M).

12. A method according to claim 10 wherein: said first and second keys (pkl to pkn, skl to skn) comprise public and private keys (pk1 to pkn, sk1 to skn) assigned to the recipients as part of a public key cryptography communication scheme; said step of utilising the public keys (pk1 to pkn) comprises: raising a fixed system parameter (g) to the power of said first random number (r) to provide a first output (d); raising each public key (pk1 to pkn) to the power of said first random number (r) to provide a second output (pki^r) ; and multiplying each said second output (pki^r) by said message (M) to provide a third output (ci), said third outputs (ci) together with said first output (d) constituting said plurality of asymmetric encryptions of the message (M).

13. A method according to claim 11 wherein said second key (ski or Si) comprises a private key assigned to the recipients as part of a public key cryptography communication scheme, and said step of utilising the private key (ski) comprises: raising said first output (d) to the power of the private key (ski) to provide a fourth output (d^ski); inverting the fourth output (d^ski) to provide a fifth output (l/(d^ski)); and multiplying the fifth output (l/(d^ski)) by the said third output (ci) corresponding to the receiving location (1 to n) to recover the message (M).

14. A method according to claim 10 wherein: said first keys (idl to idn) comprise identity keys (id1 to idn) based on the identities of the recipients; said step of utilising the identity keys (idl to idn) comprises: utilising one of the identity keys (idl) to implement a first hash-to-point algorithm (H1) to provide a first output (Qidl); utilising each remaining identity key (id2 to idn) to implement said first hash-to-point algorithm (Hl) to provide a second output (Qid2 to Qidn); utilising said first output (Qid1) together with each said second output (Qid2 to Qidn) to implement a subtraction algorithm (SUB) to provide a third output (TI to Tn); utilising said first random number (r) and a fixed system parameter (P) to implement a multiplication algorithm (MULT) to provide a fourth output (U); utilising said first random number (r) and said first output (Qid1) to implement said multiplication algorithm (MULT) to provide a fifth output (U0); utilising said first random number (r) together with each said third output (T1 to Tn) to implement said multiplication algorithm (MULT) to provide a sixth output (U1 to U(n-1) ); utilising a publicly available key (R) together with said fifth output (U0) to implement a pairing algorithm (PAIR) to provide a seventh output (t); utilising said seventh output (t) to implement a second hash-to-point algorithm (H2) to provide an eighth output (W); and utilising said message (M) together with said eighth output (W) to implement a symmetric encryption function to provide a ninth output (V), said fourth, sixth and ninth outputs (U, U1 to U(n-1), V) together constituting said plurality of asymmetric encryptions of the message (M).

15. A method according to claim 11 operative with the method of claim 14 wherein; said second keys (S1 to Sn) comprise corresponding secret keys (S1 to Sn) assigned to the recipients as part of an identity based cryptography communication scheme; step of utilising the secret key (Si) comprises: at one receiving location (1) of said receiving locations (1 to n): utilising the secret key (S1) of the recipient at the receiving location (1) together with said fourth output (U) to implement said pairing algorithm (PAIR) to provide a tenth output (t); utilising said tenth output (t) to implement said second hash-to-point algorithm (H2) to provide an eleventh output (W); and utilising said eleventh output (W) together with said ninth output (V) to implement a symmetric decryption function corresponding to said symmetric encryption function to recover said message (M); and at each remaining receiving location (2 to n): utilising the secret key (Si(1<i≤ n)) of the recipient at the receiving location (2 to n) together with said fourth output (U) to implement said pairing algorithm (PAIR) to provide a twelfth output (tl); utilising the said sixth output (U1 to U(n-1)) corresponding to the receiving location (2 to n) to implement a point negation algorithm to provide a thirteenth output; utilising said thirteenth output together with said publicly available key (R) to implement said pairing algorithm (PAIR) to provide a fourteenth output (t2); utilising said twelfth and fourteenth outputs (t1, t2) to implement said multiplication algorithm (MULT) to provide a fifteenth output (t); utilising said fifteenth output (t) to implement said second hash-to-point algorithm (H2) to provide a sixteenth output (W); and utilising said sixteenth output (W) together with said ninth output (V) to implement a symmetric decryption function corresponding to said symmetric encryption function to recover said message (M).

16. A secure communication system comprising: a communications network; at a sending location on said network an encapsulator according to claim 1 and at each receiving location (1 to n) on said network a decapsulator according to claim 2.

17. A secure communication system comprising: a communications network; at a sending location on said network an encryptor according to any one of claims 3, 5 or 6; and at each receiving location (1 to n) on said network a decryptor according to any one of claims 4 or 7.

18. A secure communication method comprising: at a sending location on a communication network implementing a method according to claim 8, and at each receiving location (1 to n) on said network implementing a method according to claim 9.

19. A secure communication method comprising: at a sending location on a communication network implementing a method according any one of claims 10, 12 or 13, and at each receiving location (1 to n) on said network implementing a method according to any one of claims 11, 13 or 15.

## Patentansprüche

1. Einkapselungseinrichtung (1) zum Erstellen (a) eines Sitzungsschlüssels (K) und (b) mehrerer asymmetrischer Verschlüsselungen des Sitzungsschlüssels (E1(K), E2(K), E3(k) ... Ei(K) ... En(K)), wobei jede Verschlüsselung jeweils einer Empfangsstelle (1 bis n) entspricht; und (ii) eine symmetrische Verschlüsselungseinrichtung (3) zum Verwenden des Sitzungsschlüssels (K) zur Verschlüsselung einer Nachricht (M); wobei die Einkapselungseinrichtung (1) umfasst: einen Pseudo-Zufallszahlengenerator (51 oder 91); eine symmetrische Schlüsselableitungseinrichtung (55 oder 95) zum Ableiten des Sitzungsschlüssels (K) aus einer vom Pseudo-Zufallszahlengenerator (51 oder 91) erzeugten ersten Zufallszahl (N); eine Einrichtung (53 oder 93) zum Verwenden der ersten Zufallszahl (N) zur Erzeugung einer zweiten Zufallszahl (r) sowie eine Einrichtung (57-0 bis 57-n und 59-1 bis 59-n, oder 97-1 bis 97-n und 99-1 bis 99-(n-1) und 101-(-1) bis 101-(n-1) und 103 und 105 und 107) zum Verwenden der ersten Schlüssel (pk1 bis pkn oder id1 bis idn) von asymmetrischen Verschlüsselungsschlüsselpaaren (pk1 bis pkn und sk1 bis skn, oder id1 bis idn und S1 bis Sn) von erwünschten Empfängern an Empfangsstellen (1 bis n) zusammen mit der zweiten Zufallszahl (r) und der ersten Zufallszahl (N), um die mehreren asymmetrischen Verschlüsselungen des Sitzungsschlüssels (E1(K), E2(K), E3(k) ... Ei(K) ... En(K)) zu erzeugen.

2. Entkapselungseinrichtung (5) zum Entschlüsseln der Verschlüsselung von jeder beliebigen der mehreren Verschlüsselungen (E1(K), E2 (K), E3(k) ... Ei (K) ... En(K)), die jeweils einer Empfangsstelle (1 bis n) entsprechen, um einen Sitzungsschlüssel (K) zu erstellen; und (ii) eine symmetrische Entschlüsselungseinrichtung (7) zum Verwenden des Sitzungsschlüssels (K) zum Entschlüsseln der Nachricht (M), wobei die Entkapselungseinrichtung (5) an jeder Empfangsstelle (1 bis n) umfasst: eine Einrichtung (71, 73, 75 oder 111, 113, 115 oder 131, 133, 135, 137, 139, 141) zum Verwenden des zweiten Schlüssels (ski oder Si) des asymmetrischen Verschlüsselungsschlüsselpaars (pki und ski oder idi und Si) des Empfängers an der Empfangsstelle zusammen mit der der Empfangsstelle entsprechenden asymmetrischen Verschlüsselung (Ei(K)), um die erste Zufallszahl (N) wiederherzustellen, sowie eine weitere symmetrische Schlüsselableitungseinrichtung (77 oder 117 oder 143) zum Ableiten des Sitzungsschlüssels (K) aus der ersten Zufallszahl (N).

3. Verschlüsselungseinrichtung (1) zum Erstellen mehrerer asymmetrischer Verschlüsselungen einer Nachricht (M), wobei jede Verschlüsselung jeweils einer Empfangsstelle (1 bis n) in einem Netzwerk entspricht, wobei die Verschlüsselungseinrichtung umfasst: eine Einrichtung (53 oder 93) zum Ableiten einer ersten Zufallszahl (r) aus der Nachricht (M) und eine Einrichtung (57-0 bis 57-n und 59-1 bis 59-n oder 97-1 bis 97-n und 99-1 bis 99-(n-1) und 101-(-1) bis 101(n-1) und 103 und 105 und 107) zum Verwenden der ersten Schlüssel (pk1 bis pkn oder id1 bis idn) von asymmetrischen Verschlüsselungsschlüsselpaaren (pk1 bis pkn und sk1 bis skn oder id1 bis idn und S1 bis Sn) von erwünschten Empfängern an den Empfangsstellen (1 bis n) zusammen mit der ersten Zufallszahl (r) und der Nachricht (M), um die mehreren asymmetrischen Verschlüsselungen der Nachricht zu erzeugen.

4. Entschlüsselungseinrichtung (5) zum Entschlüsseln der Verschlüsselung von jeder beliebigen von mehreren Verschlüsselungen, die jeweils einer Empfangsstelle (1 bis n) in einem Netzwerk entsprechen, um die Nachricht (M) zu liefern, wobei die Entschlüsselungseinrichtung (5) eine Einrichtung (71, 73, 75 oder 111, 113, 115 oder 131, 133, 135, 137, 139, 141) zum Verwenden des zweiten Schlüssels (ski oder Si) des asymmetrischen Verschlüsselungsschlüsselpaars (pki und ski oder idi und Si) eines Empfängers an der Empfangsstelle zusammen mit der der Empfangsstelle entsprechenden asymmetrischen Verschlüsselung zur Wiederherstellung der Nachricht (M) umfasst.

5. Verschlüsselungseinrichtung nach Anspruch 3, wobei die ersten und zweiten Schlüssel (pk1 bis pkn, sk1 bis skn) öffentliche und private Schlüssel (pk1 bis pkn, sk1 bis skn) umfassen, die den Empfängern als Teil eines Kryptographie-Kommunikationsschemas mit öffentlichen Schlüsseln zugeschrieben sind; wobei die Einrichtung (57-0 bis 57-n, 59-1 bis 59-n) zum Verwenden der öffentlichen Schlüssel (pk1 bis pkn) umfasst: eine Reihe von ersten Potenzierungseinrichtungen (57-0 bis 57-n), wobei eine der ersten Potenzierungseinrichtungen (57-0) einen festen Systemparameter (g) zur Potenz der ersten Zufallszahl (r) erhebt, um einen erste Ausgabe (d) zu erstellen, und jede der übrigen ersten Potenzierungseinrichtungen (57-1 bis 57-n) jeweils einen öffentlichen Schlüssel (pk1 bis pkn) zur Potenz der ersten Zufallszahl (r) erhebt, um eine zweite Ausgabe (pki^r) zu erstellen, sowie eine Reihe von ersten Multiplikationseinrichtungen (59-1 bis 59n), wobei jede erste Multiplikationseinrichtung (59-1 bis 59n) jeweils eine der zweiten Ausgaben (pki^r) mit der Nachricht (M) multipliziert, um eine dritte Ausgabe (ci) zu erstellen, wobei die dritten Ausgaben (ci) der ersten Multiplikationseinrichtungen (59-1 bis 59-n) zusammen mit der ersten Ausgabe (d) der einen der ersten Potenzierungseinrichtungen (57-0) die mehreren asymmetrischen Verschlüsselungen der Nachricht (M) bilden; und wobei die Einrichtung (71, 73, 75) zum Verwenden des privaten Schlüssels (ski) umfasst: eine zweite Potenzierungseinrichtung (71) zum Erheben der ersten Ausgabe (d) zur Potenz des privaten Schlüssels (ski), eine Inversionseinrichtung (73) zum Invertieren der Ausgabe (d^ski) der zweiten Potenzierungseinrichtung (71), und eine zweite Multiplikationseinrichtung (75) zum Multiplizieren der Ausgabe (1/(d^ski)) der Inversionseinrichtung (73) mit der der Empfangsstelle (1 bis n) entsprechenden dritten Ausgabe (ci), wodurch die Multiplikationseinrichtung (75) die Nachricht (M) wiederherstellt.

6. Verschlüsselungseinrichtung nach Anspruch 3, wobei die ersten Schlüssel (id1 bis idn) auf den Identitäten der Empfänger basierende Identitätsschlüssel (id1 bis idn) umfassen, die zweiten Schlüssel (S1 bis Sn) entsprechende geheime Schlüssel (S1 bis Sn), die den Empfängern als Teil eines identitätsbasierten Kryptographie-Kommunikationsschemas zugeschrieben worden sind, umfassen, die Einrichtung (97-1 bis 97n, 99-1 bis 99-(n-1), 101(-1) bis 101-(n-1), 103, 105, 107) zum Verwenden der Identitätsschlüssel (id1 bis idn) umfasst: eine Reihe von ersten Hash-to-Point-Einrichtungen (97-1 bis 97-n), wobei eine der ersten Hash-to-Point-Einrichtungen (97-1) einen der Identitätsschlüssel (id1) zum Implementieren eines ersten Hash-to-Point-Algorithmus (H1) verwendet, um eine erste Ausgabe (Qid1) zu erstellen, und jede der übrigen ersten Hash-to-Point-Einrichtungen (97-2 bis 97-n) jeweils die übrigen Identitätsschlüssel (id2 bis idn) zum Implementieren des ersten Hash-to-Point-Algorithmus (H1) verwendet, um eine zweite Ausgabe (Qid2 bis Qidn) zu erstellen; eine Reihe von Subtraktionseinrichtungen (99-1 bis 99-(n-1)), wobei jede Subtraktionseinrichtung (99-1 bis 99-(n-1)) die erste Ausgabe (Qid1) jeweils mit einer zweiten Ausgabe (Qid2 bis Qidn) zusammen zum Implementieren eines Subtraktionsalgorithmus (SUB) verwendet, um eine dritte Ausgabe (T1 bis Tn) zu erstellen; eine Reihe von ersten Multiplikationseinrichtungen (101-(-1) bis 101-(n-1), wobei eine der ersten Multiplikationseinrichtungen (101-(-1)) die erste Zufallszahl (r) und einen festen Systemparameter (P) zum Implementieren eines Multiplikationsalgorithmus (MULT) verwendet, um eine vierte Ausgabe (U) zu erstellen, und eine andere der ersten Multiplikationseinrichtungen (101-0) die erste Zufallszahl (r) und die erste Ausgabe (Qid1) zum Implementieren des Multiplikationsalgorithmus (MULT) verwendet, um eine fünfte Ausgabe (U0) zu erstellen, und jede der übrigen ersten Multiplikationseinrichtungen (101-1 bis 101-(n-1)) die erste Zufallszahl (r) jeweils mit einer der dritten Ausgaben (T1 bis Tn) zusammen zum Implementieren des Multiplikationsalgorithmus (MULT) verwendet, um eine sechste Ausgabe (U1 bis U(n-1)) zu erstellen; eine erste Paarungseinrichtung (103) zum Verwenden eines öffentlich verfügbaren Schlüssels (R) zusammen mit der fünften Ausgabe (U0) zum Implementieren eines Paarungsalgorithmus (PAIR), um eine siebte Ausgabe (t) zu erstellen; eine zweite Hash-to-Point-Einrichtung (105) zum Verwenden der siebten Ausgabe (t) zum Implementieren eines zweiten Hash-to-Point-Algorithmus (H2), um eine achte Ausgabe zu erstellen; und eine symmetrische Verschlüsselungseinrichtung (107) zum Verwenden der Nachricht (M) zusammen mit der achten Ausgabe (W) zum Implementieren einer symmetrischen Verschlüsselungsfunktion, um eine neunte Ausgabe (V) zu erstellen, wobei die vierte, die sechste und die neunte Ausgabe (U, U1 bis U(n-1), V) zusammen die mehreren asymmetrischen Verschlüsselungen der Nachricht (M) bilden.

7. Entschlüsselungseinrichtung nach Anspruch 4, zu betreiben in einem Kryptographiesystem, umfassend eine Verschlüsselungseinrichtung nach Anspruch 6, wobei die Einrichtung (111, 113, 115 oder 131, 133, 135, 137, 139, 141) zum Verwenden des geheimen Schlüssels (Si) umfasst: an einer Empfangsstelle (1) der Empfangsstellen (1-n) : eine zweite Paarungseinrichtung (111) zum Verwenden des geheimen Schlüssels (S1) des Empfängers an der Empfangsstelle (1) zusammen mit der vierten Ausgabe (U) zum Implementieren des Paarungsalgorithmus (PAIR), um eine zehnte Ausgabe zu erstellen; eine dritte Hash-to-Point-Einrichtung (113) zum Verwenden der zehnten Ausgabe (t) zum Implementieren des zweiten Hash-to-Point-Algorithmus (H3), um eine elfte Ausgabe (W) zu erstellen; und eine symmetrische Entschlüsselungseinrichtung (115) zum Verwenden der elften Ausgabe (W) zusammen mit der neunten Ausgabe (V) zum Implementieren einer der symmetrischen Verschlüsselungsfunktion entsprechenden symmetrischen Entschlüsselungsfunktion, um die Nachricht (M) wiederherzustellen; und an jeder übrigen Empfangsstelle (2-n): eine dritte Paarungseinrichtung (131) zum Verwenden des geheimen Schlüssels (Si(1<i≤n)) des Empfängers an der Empfangsstelle (2-n) zusammen mit der vierten Ausgabe (U) zum Implementieren des Paarungsalgorithmus (PAIR), um eine zwölfte Ausgabe (t1) zu erstellen; eine Punktnegierungseinrichtung (135) zum Verwenden der der Empfangsstelle (2-n) entsprechenden sechsten Ausgabe (U1 bis U(n-1)) zum Implementieren eines Punktnegierungsalgorithmus, um eine dreizehnte Ausgabe zu erstellen; eine vierte Paarungseinrichtung (137) zum Verwenden der dreizehnten Ausgabe zusammen mit dem öffentlich verfügbaren Schlüssel (R) zum Implementieren des Paarungsalgorithmus (PAIR), um eine vierzehnte Ausgabe (t2) zu erstellen; eine zweite Multiplikationseinrichtung (133) zum Verwenden der zwölften und der vierzehnten Ausgabe (t1, t2) zum Implementieren des Multiplikationsalgorithmus (MULT), um eine fünfzehnte Ausgabe (t) zu erstellen; eine vierte Hash-to-Point-Einrichtung (139) zum Verwenden der fünfzehnten Ausgabe (t) zum Implementieren des zweiten Hash-to-Point-Algorithmus (H2), um eine sechzehnte Ausgabe (W) zu erstellen; und ferner eine symmetrische Entschlüsselungseinrichtung (141) zum Verwenden der sechzehnten Ausgabe (W) zusammen mit der neunten Ausgabe (V) zum Implementieren einer der symmetrischen Verschlüsselungsfunktion entsprechenden symmetrischen Entschlüsselungsfunktion, um die Nachricht (M) wiederherzustellen.

8. Sicheres Kommunikationsverfahren umfassend: (i) Erstellen (a) eines Sitzungsschlüssels (K) und (b) mehrerer asymmetrischer Verschlüsselungen des Sitzungsschlüssels (E1(K), E2(K), E3(k) ... Ei(K) ... En(K)), wobei jede Verschlüsselung jeweils einer Empfangsstelle (1-n) in einem Netzwerk entspricht; und (ii) Verwenden des Sitzungsschlüssels (K) zur symmetrischen Verschlüsselung einer Nachricht (M); wobei der Schritt (i) umfasst: Erzeugen einer ersten Zufallszahl (N), Ableiten des Sitzungsschlüssels (K) aus der ersten Zufallszahl (N), Verwenden der ersten Zufallszahl (N) zum Erzeugen einer zweiten Zufallszahl (R) und Verwenden der ersten Schlüssel (pk1 bis pkn oder id1 bis idn) der asymmetrischen Verschlüsselungsschlüsselpaare (pk1 bis pkn und ski bis skn, oder id1 bis idn und S1 bis Sn) der erwünschten Empfänger an den Empfangsstellen (1-n) zusammen mit der zweiten Zufallszahl (r) und der ersten Zufallszahl (N) zum Erzeugen der mehreren asymmetrischen Verschlüsselungen des Sitzungsschlüssels (E1(K), E2(K), E3(k) ... Ei(K) ... En(K)).

9. Sicheres Kommunikationsverfahren umfassend: (i) Entschlüsseln der Verschlüsselung der mehreren Verschlüsselungen (E1 (K), E2 (K) , E3(k) ... Ei(K) ... En(K)), die einer Empfangsstelle (1-n) entsprechen, um den Sitzungssschlüssel (K) zu erstellen; und (ii) Verwenden des Sitzungsschlüssels (K) zum Entschlüsseln der Nachricht (M), wobei der Schritt (i) umfasst: Verwenden des zweiten Schlüssels (ski oder Si) eines asymmetrischen Verschlüsselungsschlüsselpaars (pki und ski, oder idi und Si) des Empfängers an der Empfangsstelle zusammen mit der der Empfangsstelle entsprechenden asymmetrischen Verschlüsselung (E1(K)), um die erste Zufallszahl (N) wiederherzustellen; und Ableiten des Sitzungsschlüssels (K) aus der ersten Zufallszahl (N).

10. Sicheres Kommunikationsverfahren, umfassend: Erstellen mehrerer asymmetrischer Verschlüsselungen einer Nachricht (M), wobei jede Verschlüsselung jeweils einer Empfangsstelle (1-n) in einem Netzwerk entspricht, wobei der Schritt des Erstellens der mehreren asymmetrischen Verschlüsselungen umfasst: Ableiten einer ersten Zufallszahl (r) aus der Nachricht (M), und Verwenden der ersten Schlüssel (pk1 bis pkn oder id1 bis idn) von asymmetrischen Verschlüsselungsschlüsselpaaren (pk1 bis pkn und sk1 bis skn, oder id1 bis idn und S1 bis Sn) von erwünschten Empfängern an den Empfangsstellen (1-n) zusammen mit der ersten Zufallszahl (r) und der Nachricht (M), um die mehreren asymmetrischen Verschlüsselungen der Nachricht zu erzeugen.

11. Sicheres Kommunikationsverfahren umfassend: Entschlüsseln einer Verschlüsselung mehrerer Verschlüsselungen, die einer Empfangsstelle (1 bis n) entspricht, um eine Nachricht (M) zu erstellen, wobei der Entschlüsselungsschritt das Verwenden eines zweiten Schlüssels (ski oder Si) eines asymmetrischen Verschlüsselungsschlüsselpaares (pki und ski, oder idi und Si) eines Empfängers an der Empfangsstelle zusammen mit der der Empfangsstelle entsprechenden asymmetrischen Verschlüsselung umfasst, um die Nachricht (M) wiederherzustellen.

12. Verfahren nach Anspruch 10, wobei: der erste und der zweite Schlüssel (pk1 bis pkn, sk1 bis skn) öffentliche und private Schlüssel (pk1 bis pkn, sk1 bis skn) umfassen, die den Empfängern als Teil eines Kryptographie-Kommunikationsschemas mit öffentlichen Schlüsseln zugeschrieben worden sind, wobei der Schritt des Verwendens der öffentlichen Schlüssel (pk1 bis pkn) umfasst: Erheben eines festen Systemparameters (g) zur Potenz der ersten Zufallszahl (r), um eine erste Ausgabe (d) zu erstellen; Erheben jedes öffentlichen Schlüssels (pk1 bis pkn) zur Potenz der ersten Zufallszahl (r), um eine zweite Ausgabe (pki^r) zu erstellen; und Multiplizieren jeder zweiten Ausgabe (pki^r) mit der Nachricht (M), um eine dritte Ausgabe (ci) zu erstellen, wobei die dritten Ausgaben (ci) zusammen mit der ersten Ausgabe (d) die mehreren asymmetrischen Verschlüsselungen der Nachricht (M) bilden.

13. Verfahren nach Anspruch 11, wobei der zweite Schlüssel (ski oder Si) einen privaten Schlüssel umfasst, der den Empfängern als Teil eines Kryptographie-Kommunikationsschemas mit öffentlichen Schlüsseln zugeschrieben worden ist, und der Schritt des Verwendens des privaten Schlüssels (ski) umfasst: Erheben der ersten Ausgabe (d) zur Potenz des privaten Schlüssels (ski), um eine vierte Ausgabe (d^ski) zu erstellen; Invertieren der vierten Ausgabe (d^ski), um eine fünfte Ausgabe (1/(d^ski)) zu erstellen; und Multiplizieren der fünften Ausgabe (1/(d^ski)) mit der der Empfangsstelle (1 bis n) entsprechenden dritten Ausgabe (ci), um die Nachricht (M) wiederherzustellen.

14. Verfahren nach Anspruch 10, wobei: die ersten Schlüssel (id1 bis idn) auf den Identitäten der Empfänger basierende Identitätsschlüssel (id1 bis idn) umfassen; der Schritt des Verwendens der Identitätsschlüssel (id1 bis idn) umfasst: Verwenden eines der Identitätsschlüssel (id1) zum Implementieren eines ersten Hash-to-Point-Algorithmus (H1), um eine erste Ausgabe (Qid1) zu erstellen; Verwenden jedes der übrigen Identitätsschlüssel (id1 bis idn) zum Implementieren des ersten Hash-to-Point-Algorithmus (H1), um eine zweite Ausgabe (Qid2 bis Qidn) zu erstellen; Verwenden der ersten Ausgabe (Qid1) zusammen mit jeder zweiten Ausgabe (Qid2 bis Qidn) zum Implementieren eines Subtraktionsalgorithmus (SUB), um eine dritte Ausgabe (T1 bis Tn) zu erstellen; Verwenden der ersten Zufallszahl (r) und eines festen Systemparameters (P) zum Implementieren eines Multiplikationsalgorithmus (MULT), um eine vierte Ausgabe (U) zu erstellen; Verwenden der ersten Zufallszahl (r) und der ersten Ausgabe (Qid1) zum Implementieren des Multiplikationsalgorithmus (MULT), um eine fünfte Ausgabe (U0) zu erstellen; Verwenden der ersten Zufallszahl (r) zusammen mit der dritten Ausgabe (T1 bis Tn) zum Implementieren des Multiplikationsalgorithmus (MULT), um eine sechste Ausgabe (U1 bis U(n-1)) zu erstellen; Verwenden eines öffentlich verfügbaren Schlüssels (R) zusammen mit der fünften Ausgabe (U0) zum Implementieren eines Paarungsalgorithmus (PAIR), um eine siebte Ausgabe (t) zu erstellen; Verwenden der siebten Ausgabe (t) zum Implementieren eines zweiten Hash-to-Point-Algorithmus (H2), um eine achte Ausgabe (W) zu erstellen; und Verwenden der Nachricht (M) zusammen mit der achten Ausgabe (W) zum Implementieren einer symmetrischen Verschlüsselungsfunktion, um einen neunte Ausgabe (V) zu erstellen, wobei die vierte, die sechste und die neunte Ausgabe (U, U1 bis U(n-1), V) zusammen die mehreren asymmetrischen Verschlüsselungen der Nachricht (M) bilden.

15. Verfahren nach Anspruch 11, zu betreiben mit dem Verfahren nach Anspruch 14, wobei: die zweiten Schlüssel (S1 bis Sn) entsprechende geheime Schlüssel (S1 bis Sn) umfassen, die den Empfängern als Teil eines identitätsbasierten Kryptographie-Kommunikationsschemas zugeschrieben worden sind; der Schritt des Verwendens des geheimen Schlüssels (Si) umfasst: an einer Empfangsstelle (1) der Empfangsstellen (1 bis n): das Verwenden des geheimen Schlüssels (S1) des Empfängers an der Empfangsstelle (1) zusammen mit der vierten Ausgabe (U) zum Implementieren des Paarungsalgorithmus (PAIR), um eine zehnte Ausgabe (t) zu erstellen; Verwenden der zehnten Ausgabe (t) zum Implementieren des zweiten Hash-to-Point-Algorithmus (H2), um eine elfte Ausgabe (W) zu erstellen; und Verwenden der elften Ausgabe (W) zusammen mit der neunten Ausgabe (V) zum Implementieren einer symmetrischen Entschlüsselungsfunktion, die der symmetrischen Verschlüsselungsfunktion entspricht, um die Nachricht (M) wiederherzustellen; und an jeder der übrigen Empfangsstellen (2-n): Verwenden des öffentlichen Schlüssels (Si(1<i≤n)) des Empfängers an der Empfangsstelle (2 bis n) zusammen mit der vierten Ausgabe (U) zum Implementieren des Paarungsalgorithmus (PAIR), um eine zwölfte Ausgabe (t1) zu erstellen; Verwenden der der Empfangsstelle (2 bis n) entsprechenden sechsten Ausgabe (U1 bis U(n-1)) zum Implementieren eines Punktnegierungsalgorithmus, um eine dreizehnte Ausgabe zu erstellen; Verwenden der dreizehnten Ausgabe zusammen mit dem öffentlich verfügbaren Schlüssel (R) zum Implementieren des Paarungsalgorithmus (PAIR), um eine vierzehnte Ausgabe (t2) zu erstellen; Verwenden der zwölften und der vierzehnten Ausgabe (t1, t2) zum Implementieren des Multiplikationsalgorithmus (MULT), um eine fünfzehnte Ausgabe (t) zu erstellen, Verwenden der fünfzehnten Ausgabe (t) zum Implementieren des zweiten Hash-to-Point-Algorithmus (H2), um eine sechzehnte Ausgabe (W) zu erstellen; und Verwenden der sechzehnten Ausgabe (W) zusammen mit der neunten Ausgabe (V) zum Implementieren einer der symmetrischen Verschlüsselungsfunktion entsprechenden symmetrischen Entschlüsselungsfunktion, um die Nachricht (M) wiederherzustellen.

16. Sicheres Kommunikationssystem umfassend: ein Kommunikationsnetzwerk; eine Einkapselungseinrichtung nach Anspruch 1 an einer Sendestelle im Netzwerk und eine Entkapselungseinrichtung nach Anspruch 2 an jeder Empfangsstelle (1 bis n) im Netzwerk.

17. Sicheres Kommunikationssystem umfassend: ein Kommunikationsnetzwerk; eine Verschlüsselungseinrichtung nach einem der Ansprüche 3, 5 oder 6 an einer Sendestelle im Netzwerk; und eine Entschlüsselungseinrichtung nach einem der Ansprüche 4 oder 7 an jeder Empfangsstelle (1 bis n) im Netzwerk.

18. Sicheres Kommunikationsverfahren umfassend: Implementieren eines Verfahrens nach Anspruch 8 an einer Sendestelle in einem Kommunikationsnetzwerk, und Implementieren eines Verfahrens nach Anspruch 9 an jeder Empfangsstelle (1 bis n) im Netzwerk.

19. Sicheres Kommunikationsverfahren umfassend: Implementieren eines Verfahrens nach einem der Ansprüche 10, 12 oder 13 an einer Sendestelle in einem Kommunikationsnetzwerk, und Implementieren eines Verfahrens nach einem der Ansprüche 11, 13 oder 15 an jeder Empfangsstelle (1 bis n) im Netzwerk.

## Revendications

1. Encapsulateur (1) destiné à produire (a) une clé de session (K), et (b) une pluralité de cryptages asymétriques de la clé de session (E1(K), E2(K), E3(K) ... Ei(K) ... En(K)), chaque cryptage correspondant à un emplacement de réception respectif (1 à n) ; et (ii) un crypteur symétrique (3) destiné à utiliser ladite clé de session (K) pour crypter un message (M) ; ledit encapsulateur (1) comportant : un générateur (51 ou 91) de nombres pseudo-aléatoires ; un moyen (55 ou 95) de dérivation de clé symétrique destiné à dériver ladite clé de session (K) d'un premier nombre aléatoire (N) généré par ledit générateur (51 ou 91) de nombres pseudo-aléatoires ; un moyen (53 ou 93) destiné à utiliser ledit premier nombre aléatoire (N) pour générer un deuxième nombre aléatoire (r) ; et des moyens (57-0 à 57-N et 59-1 à 59-n, ou 97-1 à 97-n et 99-1 à 99-(n-1) et 101-(-1) à 101-(n-1) et 103 et 105 et 107) destinés à utiliser les premières clés (pk1 à pkn, ou id1 à idn) de paires de clés de cryptage asymétrique (pk1 à pkn et sk1 à skn, ou id1 à idn et S1 à Sn) de destinataires prévus en des emplacements de réception (1 à n) en même temps que ledit deuxième nombre aléatoire (r) et ledit premier nombre aléatoire (N) pour générer ladite pluralité de cryptages asymétriques de la clé de session (E1(K), E2(K), E3(K) ... Ei(K)... En(K)).

2. Décapsulateur (5) pour décrypter le cryptage de l'un quelconque d'une pluralité de cryptages (E1(K), E2(K), E3(K),... Ei(K) ... En(K)) qui correspondent à un emplacement de réception (1 à n) pour produire une clé de session (K) ; et (ii) un décrypteur symétrique (7) pour l'utilisation de la clé de session (K) afin de décrypter le message (M), ledit décapsulateur (5) à chaque emplacement de réception (1 à n) comportant : un moyen (71, 73, 75 ou 111, 113, 115 ou 131, 133, 135, 137, 139, 141) destiné à utiliser la seconde clé (ski ou Si) de la paire de clés de cryptage asymétrique (pki et ski, ou idi et Si) du destinataire à l'emplacement de réception en même temps que le cryptage asymétrique (Ei(K)) correspondant à un emplacement de réception pour récupérer ledit premier nombre aléatoire (N) ; et un autre moyen (77, ou 117 ou 143) de dérivation de clé symétrique pour dériver ladite clé de session (K) dudit premier nombre aléatoire (N).

3. Crypteur (1) destiné à produire une pluralité de cryptages asymétriques pour un message (M), dans lequel chaque cryptage peut correspondre à un emplacement de réception respectif (1 à n) sur un réseau, ledit crypteur comportant: un moyen (53 ou 93) destiné à dériver dudit message (M) un premier nombre aléatoire (r) ; un moyen (57-0 à 57-n et 59-1 à 59-n, ou 97-1 à 97-n et 99-1 à 99-(n-1) et 101-(-1) à 101-(n-1) et 103 et 105 et 107) destiné à utiliser les premières clés (pk1 à pkn, ou id1 à idn) de paires de clés de cryptage asymétrique (pk1 à pkn et sk1 à skn, ou id1 à idn et S1 à Sn) de destinataires prévus aux emplacements de réception (1 à n) en même temps que ledit premier nombre aléatoire (r) et ledit message (M) pour générer ladite pluralité de cryptages asymétriques du message.

4. Décrypteur (5) destiné à décrypter le cryptage de l'un d'une pluralité de cryptages qui correspond à un emplacement de réception (1 à n) sur un réseau pour produire ledit message (M), ledit décrypteur (5) comportant un moyen (71, 73, 75 ou 111, 113, 115 ou 131, 133, 135, 137, 139, 141) destiné à utiliser ladite seconde clé (ski ou Si) de la paire de clés de cryptage asymétrique (pki et ski, ou idi et Si) d'un destinataire à l'emplacement de réception en même temps que le cryptage asymétrique correspondant à l'emplacement de réception pour récupérer le message (M).

5. Crypteur selon la revendication 3, dans lequel: lesdites première et deuxième clés (pk1 à pkn, sk1 à skn) comprennent des clés publiques et privées (pk1 à pkn, sk1 à skn) affectées aux destinataires en tant que parties d'un processus de communication de cryptographie par clés publiques ; ledit moyen (57-0 à 57-n, 59-1 à 59-n) pour l'utilisation des clés publiques (pk1 à pkn) comporte: une série de premiers moyens d'exponentiation (57-0 à 57-n), l'un desdits premiers moyens d'exponentiation (57-0) élevant un paramètre de système fixe (g) à la puissance dudit premier nombre aléatoire (r) pour produire une première sortie (d), chacun des autres desdits premiers moyens d'exponentiation (57-1 à 57-n) élevant une clé publique respective (pk1 à pkn) à la puissance dudit premier nombre aléatoire (r) pour produire une seconde sortie (pki^r) ; et une série de premiers moyens de multiplication (59-1 à 59-n), chaque premier moyen de multiplication (59-1 à 59-n) multipliant une deuxième sortie respective (pki^r) par ledit message (M) pour produire une troisième sortie (ci), lesdites troisièmes sorties (ci) desdits premiers moyens de multiplication (59-1 à 59-n) constituant, avec ladite première sortie (d) dudit, un, desdits premiers moyens d'exponentiation (57-0), constituant ladite pluralité de cryptages asymétriques du message (M) ; et ledit moyen (71, 73, 75) destiné à utiliser la clé privée (ski) comprend : un second moyen d'exponentiation (71) destiné à élever ladite première sortie (d) à la puissance de la clé privée (ski) ; un moyen d'inversion (73) destiné à inverser la sortie (d^ski) dudit second moyen d'exponentiation (71) ; et un second moyen de multiplication (75) destiné à multiplier la sortie (1/(d^ski)) dudit moyen d'inversion (73) par ladite troisième sortie (ci) correspondant à l'emplacement de réception (1 à n), ledit second moyen de multiplication (75) récupérant ainsi le message (M).

6. Crypteur selon la revendication 3, dans lequel : lesdites premières clés (id1 à idn) comprennent des clés d'identité (id1 à idn) basées sur les identités des destinataires ; lesdites secondes clés (S1 à Sn) comprennent des clés de secret correspondantes (S1 à Sn) affectées aux destinataires en tant que parties d'un processus de communication par cryptographie basé sur l'identité ; ledit moyen (97-1 à 97-n, 99-1 à 99-(n-1), 101-(-1) à 101-(n-1), 103, 105, 107) destiné à utiliser les clés d'identité (id1 à idn) comporte: une série de premiers moyens (97-1 à 97-n) de hachage vers un point, l'un desdits premiers moyens de hachage vers un point (97-1) utilisant l'une des clés d'identité (id1) pour exécuter un premier algorithme de hachage vers un point (H1) afin de produire une première sortie (Qid1), chacun des autres desdits premiers moyens de hachage vers un point (97-2 à 97-n) utilisant une clé d'identité restante respective (id2 à idn) pour exécuter ledit premier algorithme de hachage vers un point (H1) afin de produire une deuxième sortie (Qid2 à Qidn) ; une série de moyens de soustraction (99-1 à 99-(n-1)), chacun desdits moyens de soustraction (99-1 à 99-(n-1)) utilisant ladite première sortie (Qid1) en même temps qu'une, respective, deuxième sortie (Qid2 à Qidn) pour exécuter un algorithme de soustraction (SUB) afin de produire une troisième sortie (T1 à Tn); une série de premiers moyens de multiplication (101-(-1) à 101-(n-1)), l'un desdits premiers moyens de multiplication (101-(-1)) utilisant ledit premier nombre aléatoire (r) et un paramètre de système fixe (P) pour exécuter un algorithme de multiplication (MULT) afin de produire une quatrième sortie (U), un autre desdits premiers moyens de multiplication (101-0) utilisant ledit premier nombre aléatoire (r) et ladite première sortie (Qid1) pour exécuter ledit algorithme de multiplication (MULT) afin de produire une cinquième sortie (U0), chacun desdits premiers moyens de multiplication (101-1 à 101-(n-1)) restants utilisant ledit premier nombre aléatoire (r) en même temps qu'une troisième sortie respective (T1 à Tn) pour exécuter ledit algorithme de multiplication (MULT) afin de produire une sixième sortie (U1 à U(n-1)) ; un premier moyen d'appariement (103) destiné à utiliser une clé disponible publiquement (R) en même temps que ladite cinquième sortie (U0) pour exécuter un algorithme d'appariement (PAIR) pour produire une septième sortie (t) ; un second moyen de hachage vers un point (105) destiné à utiliser ladite septième sortie (t) pour exécuter un second algorithme de hachage vers un point (H2) afin de produire une huitième sortie (W) ; et un moyen de cryptage symétrique (107) destiné à utiliser ledit message (M) en même temps que ladite huitième sortie (W) pour exécuter une fonction de cryptage symétrique afin de produire une neuvième sortie (V), lesdites quatrième, sixième et neuvième sorties (U, U1 à U(n-1), V) constituant ensemble ladite pluralité de cryptages asymétriques du message (M).

7. Décrypteur selon la revendication 4, mis en oeuvre dans un système de cryptographie comportant un crypteur selon la revendication 6, dans lequel ledit moyen (111, 113, 115 ou 131, 133, 135, 137, 139, 141) destiné à utiliser la clé de secret (Si) comporte : en un emplacement de réception (1) parmi lesdits emplacements de réception (1 à n) : un second moyen d'appariement (111) destiné à utiliser la clé de secret (S1) du destinataire à l'emplacement de réception (1) en même temps que ladite quatrième sortie (U) pour exécuter ledit algorithme d'appariement (PAIR) afin de produire une dixième sortie (t) ; un troisième moyen de hachage vers un point (113) destiné à utiliser ladite dixième sortie (t) pour exécuter ledit deuxième algorithme de hachage vers un point (H2) afin de produire une onzième sortie (W) ; et un moyen de décryptage symétrique (115) destiné à utiliser ladite onzième sortie (W) en même temps que ladite neuvième sortie (V) pour exécuter une fonction de décryptage symétrique correspondant à ladite fonction de cryptage symétrique afin de récupérer ledit message (M) ; et en chacun des emplacements de réception restants (2 à n) : un troisième moyen d'appariement (131) destiné à utiliser la clé de secret (Si(1<i≤n)) du destinataire à l'emplacement de réception (2 à n) en même temps que ladite quatrième sortie (U) pour exécuter ledit algorithme d'appariement (PAIR) afin de produire une douzième sortie (t1) ; un moyen (135) de négation de point destiné à utiliser ladite sixième sortie (U1 à U(n-1)) correspondant à l'emplacement de réception (2 à n) pour exécuter un algorithme de négation de point afin de produire une treizième sortie ; un quatrième moyen d'appariement (137) destiné à utiliser ladite treizième sortie en même temps que ladite clé disponible publiquement (R) pour exécuter ledit algorithme d'appariement (PAIR) afin de produire une quatorzième sortie (t2) ; un deuxième moyen de multiplication (133) destiné à utiliser lesdites douzième et quatorzième sorties (t1, t2) pour exécuter ledit algorithme de multiplication (MULT) afin de produire une quinzième sortie (t) ; un quatrième moyen de hachage vers un point (139) destiné à utiliser ladite quinzième sortie (t) pour exécuter ledit deuxième algorithme de hachage vers un point (H2) afin de produire une seizième sortie (W) ; et un autre moyen de décryptage symétrique (141) destiné à utiliser ladite seizième sortie (W) en même temps que ladite neuvième sortie (V) pour exécuter une fonction de décryptage symétrique correspondant à ladite fonction de cryptage symétrique afin de récupérer ledit message (M).

8. Procédé de communication sécurisé comprenant : (i) l'utilisation (a) d'une clé de session (K), et (b) d'une pluralité de cryptages asymétriques de la clé de session (E1(K), E2 (K), E3(K) ... Ei(K) ... En(K)), chaque cryptage correspondant à un emplacement de réception respectif (1 à n) sur un réseau ; et (ii) l'utilisation de ladite clé de session (K) pour crypter symétriquement un message (M) ; ladite étape (i) comprenant : la génération d'un premier nombre aléatoire (N) ; la dérivation de ladite clé de session (K) à partir dudit premier nombre aléatoire (N) ; l'utilisation dudit premier nombre aléatoire (N) pour générer un deuxième nombre aléatoire (r) ; et l'utilisation des premières clés (pk1 à pkn, ou id1 à idn) des paires de clés de cryptage asymétrique (pk1 à pkn et sk1 à skn ou id1 à idn et S1 à Sn) des destinataires prévus aux emplacements de réception (1 à n) en même temps que dudit deuxième nombre aléatoire (r) et dudit premier nombre aléatoire (N) pour générer ladite pluralité de cryptages asymétriques de la clé de session (E1 (K), E2(K), E3 (K)... Ei (K)... En (K)).

9. Procédé de communication sécurisé comprenant: (i) le décryptage du cryptage de ladite pluralité de cryptages (E1(K), E2 (K) , E3 (K) ... Ei (K) ... En(K)) qui correspond à un emplacement de réception (1 à n) pour procurer ladite clé de session (K) ; et (ii) l'utilisation de la clé de session (K) pour décrypter le message (M), ladite étape (i) comprenant : l'utilisation de la deuxième clé (ski ou Si) d'une paire de clés de cryptage asymétrique (pki et ski, ou idi et Si) du destinataire à l'emplacement de réception en même temps que le cryptage asymétrique (Ei(K)) correspondant à l'emplacement de réception pour récupérer ledit premier nombre aléatoire (N) ; et la dérivation de ladite clé de session (K) à partir dudit premier nombre aléatoire (N).

10. Procédé de communication sécurisé comprenant: la fourniture d'une pluralité de cryptages asymétriques d'un message (M), chaque cryptage correspondant à un emplacement de réception respectif (1 à n) sur un réseau, ladite étape de fourniture de ladite pluralité de cryptages asymétriques comprenant : la dérivation à partir dudit message (M) d'un premier nombre aléatoire (r) ; et l'utilisation des premières clés (pk1 à pkn, ou id1 à idn) de paires de clés de cryptage asymétrique (pk1 à pkn et sk1 à skn, ou id1 à idn et S1 à Sn) de destinataires prévus aux emplacements de réception (1 à n) en même temps que ledit premier nombre aléatoire (r) et ledit message (M) pour générer ladite pluralité de cryptages asymétriques du message.

11. Procédé de communication sécurisé comprenant : le décryptage d'un cryptage d'une pluralité de cryptages qui correspond à un emplacement de réception (1 à n) pour produire un message (M), ladite étape de décryptage comprenant l'utilisation d'une deuxième clé (ski ou Si) d'une paire de clés de cryptage asymétrique (pki et ski, ou idi et Si) d'un destinataire à l'emplacement de réception en même temps que le cryptage asymétrique correspondant à l'emplacement de réception pour récupérer le message (M).

12. Procédé selon la revendication 10, dans lequel : lesdites première et deuxième clés (pk1 à pkn, sk1 à skn) comprennent des clés publiques et privées (pk1 à pkn, sk1 à skn) affectées aux destinataires en tant que parties d'un processus de communication par cryptographie à clé publique ; ladite étape d'utilisation des clés publiques (pk1 à pkn) comprend: l'élévation d'un paramètre de système fixe (g) à la puissance dudit premier nombre aléatoire (r) pour produire une première sortie (d) ; l'élévation de chaque clé publique (pk1 à pkn) à la puissance dudit premier nombre aléatoire (r) pour produire une deuxième sortie (pki^r) ; et la multiplication de chaque deuxième sortie (pki^r) par ledit message (M) pour produire une troisième sortie (ci), lesdites troisièmes sorties (ci) constituant, avec ladite première sortie (d), ladite pluralité de cryptages asymétriques du message (M).

13. Procédé selon la revendication 11, dans lequel ladite deuxième clé (ski ou Si) comprend une clé privée affectée aux destinataires en tant que partie d'un processus de communication par cryptographie à clé publique, et ladite étape d'utilisation de la clé privée (ski) comprend : l'élévation de ladite première sortie (d) à la puissance de la clé privée (ski) pour produire une quatrième sortie (d^ski) ; l'inversion de la quatrième sortie (d^ski) pour produire une cinquième sortie (1/(d^ski)) ; et la multiplication de la cinquième sortie (1/(d^ski)) par ladite troisième sortie (ci) correspondant à l'emplacement de réception (1 à n) pour récupérer le message (M).

14. Procédé selon la revendication 10, dans lequel : lesdites premières clés (id1 à idn) comprennent des clés d'identité (id1 à idn) basées sur les identités des destinataires ; ladite étape d'utilisation des clés d'identité (id1 à idn) comprend: l'utilisation de l'une des clés d'identité (id1) pour exécuter un premier algorithme de hachage vers un point (H1) afin de produire une première sortie (Qid1) ; l'utilisation de chaque clé d'identité restante (id2 à idn) pour exécuter ledit premier algorithme de hachage vers un point (H1) afin de produire une deuxième sortie (Qid2 à Qidn) ; l'utilisation de ladite première sortie (Qid1) en même temps que chacune desdites deuxièmes sorties (Qid2 à Qidn) pour exécuter un algorithme de soustraction (SUB) afin de produire une troisième sortie (T1 à Tn) ; l'utilisation dudit premier nombre aléatoire (r) et d'un paramètre de système fixe (P) pour exécuter un algorithme de multiplication (MULT) afin de produire une quatrième sortie (U) ; l'utilisation dudit premier nombre aléatoire (r) et de ladite première sortie (Qid1) pour exécuter ledit algorithme de multiplication (MULT) afin de produire une cinquième sortie (U0), l'utilisation dudit premier nombre aléatoire (r) en même temps que chacune desdites troisièmes sorties (T1 à Tn) pour exécuter ledit algorithme de multiplication (MULT) afin de produire une sixième sortie (U1 à U(n-1)) ; l'utilisation d'une clé disponible publiquement (R) en même temps que ladite cinquième sortie (U0) pour exécuter un algorithme d'appariement (PAIR) pour produire une septième sortie (t) ; l'utilisation de ladite septième sortie (t) pour exécuter un deuxième algorithme de hachage vers un point (H2) afin de produire une huitième sortie (W) ; et l'utilisation dudit message (M) en même temps que ladite huitième sortie (W) pour exécuter une fonction de cryptage symétrique afin de produire une neuvième sortie (V), lesdites quatrième, sixième et neuvième sorties (U, U1 à U(n-1), V) constituant ensemble ladite pluralité de cryptages asymétriques du message (M).

15. Procédé selon la revendication 11, mis en oeuvre avec le procédé de la revendication 14, dans lequel : lesdites deuxièmes clés (S1 à Sn) comprennent des clés de secret correspondantes (S1 à Sn) affectées aux destinataires en tant que partie d'un processus de communication à cryptographie basé sur l'identité ; une étape d'utilisation de la clé de secret (Si) comprend: à un emplacement de réception (1) desdits emplacements de réception (1 à n) : l'utilisation de la clé de secret (S1) du destinataire à l'emplacement de réception (1) en même temps que ladite quatrième sortie (U) pour exécuter ledit algorithme d'appariement (PAIR) afin de produire une dixième sortie (t) ; l'utilisation de ladite dixième sortie (t) pour exécuter ledit deuxième algorithme de hachage vers un point (H2) afin de produire une onzième sortie (W) ; et l'utilisation de ladite onzième sortie (W) en même temps que ladite neuvième sortie (V) pour exécuter une fonction de décryptage symétrique correspondant à ladite fonction de cryptage symétrique afin de récupérer ledit message (M) ; et en chacun des emplacements de réception restants (2 à n) : l'utilisation de la clé de secret (Si(1<i≤n)) du destinataire à l'emplacement de réception (2 à n) en même temps que ladite quatrième sortie (U) pour exécuter ledit algorithme d'appariement (PAIR) afin de produire une douzième sortie (t1) ; l'utilisation de ladite sixième sortie (U1 à U(n-1)) correspondant à l'emplacement de réception (2 à n) pour exécuter un algorithme de négation de point afin de produire une treizième sortie ; l'utilisation de ladite treizième sortie en même temps que ladite clé disponible publiquement (R) pour exécuter ledit algorithme d'appariement (PAIR) afin de produire une quatorzième sortie (t2) ; l'utilisation desdites douzième et quatorzième sorties (t1, t2) pour exécuter ledit algorithme de multiplication (MULT) afin de produire une quinzième sortie (t) ; l'utilisation de ladite quinzième sortie (t) pour exécuter ledit deuxième algorithme de hachage vers un point (H2) afin de produire une seizième sortie (W) ; et l'utilisation de ladite seizième sortie (W) en même temps que ladite neuvième sortie (V) pour exécuter une fonction de décryptage symétrique correspondant à ladite fonction de cryptage symétrique afin de récupérer ledit message (M).

16. Système de communication sécurisé comprenant : un réseau de communications ; à un emplacement d'envoi sur ledit réseau, un encapsulateur selon la revendication 1 et, à chaque emplacement de réception (1 à n) sur ledit réseau, un décapsulateur selon la revendication 2.

17. Système de communication sécurisé comprenant : un réseau de communications ; à un emplacement d'envoi sur ledit réseau, un crypteur selon l'une quelconque des revendications 3, 5 ou 6 ; et, à chaque emplacement de réception (1 à n) sur ledit réseau, un décrypteur selon l'une quelconque des revendications 4 ou 7.

18. Procédé de communication sécurisé comprenant : à un emplacement d'envoi sur un réseau de communications, la mise en oeuvre d'un procédé selon la revendication 8 et, à chaque emplacement de réception (1 à n) sur ledit réseau, la mise en oeuvre d'un procédé selon la revendication 9.

19. Procédé de communication sécurisé comprenant : à un emplacement d'envoi sur un réseau de communications, la mise en oeuvre d'un procédé selon l'une quelconque des revendications 10, 12 ou 13 et, à chaque emplacement de réception (1 à n) sur ledit réseau, la mise en oeuvre d'un procédé selon l'une quelconque des revendications 11, 13 ou 15.
